(19) Europäisches Patentamt / European Patent Office / Office européen des brevets

(11) **EP 4 563 843 A1**

(12) **EUROPEAN PATENT APPLICATION**
published in accordance with Art. 153(4) EPC

(43) Date of publication:
**04.06.2025 Bulletin 2025/23**

(21) Application number: **23846708.8**

(22) Date of filing: **28.07.2023**

(51) International Patent Classification (IPC):
*F16G 5/06* (2006.01)   *B29D 29/10* (2006.01)
*D03D 1/00* (2006.01)   *D03D 9/00* (2006.01)
*D03D 19/00* (2006.01)   *F16G 5/08* (2006.01)
*F16G 5/20* (2006.01)

(52) Cooperative Patent Classification (CPC):
**B29D 29/10; D03D 1/00; D03D 9/00; D03D 19/00;
F16G 5/06; F16G 5/08; F16G 5/20**

(86) International application number:
**PCT/JP2023/027874**

(87) International publication number:
**WO 2024/024978 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 JP 2022121172
24.07.2023 JP 2023120314**

(71) Applicant: **Mitsuboshi Belting Ltd.
Kobe-shi, Hyogo 653-0024 (JP)**

(72) Inventors:
• **KIMURA, Takeshi
  Kobe-shi, Hyogo 653-0024 (JP)**
• **FUKUNAGA, Yudai
  Kobe-shi, Hyogo 653-0024 (JP)**

(74) Representative: **Hoffmann Eitle
Patent- und Rechtsanwälte PartmbB
Arabellastraße 30
81925 München (DE)**

(54) **JOINED V-BELT AND MANUFACTURING METHOD THEREFOR**

(57)     The present invention relates to a joined V-belt comprising a plurality of wrapped V-belt portions and a tie band. The outer peripheral surfaces of the wrapped V-belt portions are coupled by the tie band. The wrapped V-belt portions each include a belt body and an outer fabric cover covering the outer surface of the belt body. The belt body includes a core body layer, an extension rubber layer, and a compression rubber layer. The tie band includes a short fiber-containing rubber layer, and the short fiber-containing rubber layer has a plurality of rib portions.

FIG. 1

WIDTH OF CONNECTING PORTION

EP 4 563 843 A1

**Description**

TECHNICAL FIELD

The present invention relates to a joined V-belt in which a plurality of wrapped V-belts are connected in a width direction and a method for producing the same.

BACKGROUND ART

A frictional power-transmission belt such as a V-belt, a V-ribbed belt, and a flat belt is known as a power-transmission belt that transmits power. The V-belt includes a raw-edge type (raw-edge V-belt) that is a rubber layer in which a frictional power-transmission flank is exposed, and a wrapped type (wrapped V-belt) in which a frictional power-transmission flank (V-shaped side face) is covered with a cover fabric. These V-belts are widely used in general industrial machines and agricultural machines.

In the case where the V-belt can transmit power alone, only one V-belt is used. For example, in a high-load operating environment requiring enormous power transmission while repeating forward rotation and reverse rotation in multiple axes, such as an operating environment in a large agricultural machine used in a large-scale farm in Europe, America and the like, it is necessary to use a plurality of V-belts simultaneously. That is, it is necessary to wind the plurality of V-belts around pulleys of a belt power-transmission system in a state where the plurality of V-belts are arranged in parallel (multiple winding belts), and rotate and run the plurality of V-belts.

However, when the plurality of V-belts are applied in parallel, a tension difference is generated between the plurality of parallel V-belts, and stable power transmission may be impaired. Furthermore, as a result of contact between adjacent V-belts, there is a possibility that an inner peripheral side and an outer peripheral side of the belt are reversed to form a reverse structure. In a traveling layout of a belt power-transmission system in a large agricultural machine used in Europe, America and the like, an inter-axis distance between pulleys around which a V-belt is wound is very long. Therefore, in the case where the V-belt is likely to swing largely during running and lengths of the plurality of belts are uneven, vibration may be applied.

Therefore, in an environment in which a plurality of V-belts are caused to run in parallel, a joined belt (joined V-belt) formed by connecting a plurality of annular V-belt portions in a belt width direction each having a configuration similar to that of the V-belt or a configuration corresponding to the V-belt. The joined belt is configured as a V-belt in which a plurality of belt portions are connected and bonded by a tie band (bonding member such as a fabric) in a state where the plurality of belt portions are arranged in parallel.

With regard to the joined V-belts, for example, a low-edge joined V-belt is disclosed in FIGS. 1 and 2 of JPH10-274290A (Patent Document 1) and FIG. 2 of JP2001-241513A (Patent Document 2). A wrapped joined V-belt is disclosed in FIG. 1 of JPH04-351350A(Patent Document 3) and FIG. 1 of JP2020-3061A (Patent Document 4). According to these joined V-belts, it is possible to transmit a large power by a plurality of V-shaped protruding portions while solving the above-described problem that may occur when a plurality of V-belts are wound around pulleys.

On the other hand, in a belt power-transmission system that requires multiaxial transmission using such a joined V-belt, power may be transmitted not only by an inner peripheral surface of the belt but also by an outer peripheral surface (back face) of the belt. In the power-transmission system, in order to improve the power-transmission performance on the outer peripheral surface (back face), a frictional power-transmission flank having a V-shaped side face capable of coming into contact with a V-grooved pulley is also preferably provided on an outer peripheral surface side.

A single belt (V-belt that is not connected in plural) is known as a V-belt (so-called hexagonal belt) capable of double-sided transmission. For example, JP2016-200231A (Patent Document 5) discloses a transmission belt for double-sided transmission including an inner peripheral side portion and an outer peripheral side portion in contact with an outer peripheral side of the inner peripheral side portion, in which a surface of the inner peripheral side portion and a surface of the outer peripheral side portion have mutually different friction coefficients. JP2019-32078A (Patent Document 6) discloses an endless V-belt having a V-shaped side face capable of coming into contact with a V-grooved pulley and having a hexagonal cross-section on both surfaces of an inner peripheral side face and an outer peripheral side face.

CITATION LIST

PATENT LITERATURE

Patent Literature 1: JPH10-274290A
Patent Literature 2: JP2001-241513A

Patent Literature 3: JPH04-351350A
Patent Literature 4: JP2020-3061A
Patent Literature 5: JP2016-200231A
Patent Literature 6: JP2019-32078A

SUMMARY OF INVENTION

TECHNICAL PROBLEM

However, each of the joined V-belts disclosed in Patent Documents 1 to 4 has been put into practical use, but cannot transmit power through the outer peripheral surface. On the other hand, in the case of the hexagonal belts disclosed in Patent Documents 5 to 6, a degree of difficulty in manufacturing is high and the hexagonal belts are not put into practical use to connect a plurality of hexagonal belts in a width direction. For this reason, there is a demand for a joined V-belt excellent in productivity and capable of double-sided transmission.

Accordingly, an object of the present invention is to provide a joined V-belt of a connected type and a method for producing the same that is capable of double-sided transmission with high performance and is capable of performing high-capacity transmission.

SOLUTION TO PROBLEM

As a result of intensive studies to achieve the above object, the inventors of the present invention have found that it is possible to provide a joined V-belt of a connected type capable of performing double-sided transmission with high performance and capable of performing high-capacity transmission by using a tie band including a short fiber-containing rubber layer in which a short fiber is oriented in a belt width direction as a tie band to be used in the V-belt of the present invention, and the short fiber-containing rubber layer includes a plurality of rib portions extending in a belt longitudinal direction, and the present invention is completed.

That is, according to an aspect [1] of the present invention, a joined V-belt includes:

a plurality of wrapped V-belt portions; and
a tie band, in which
outer peripheral surfaces of the wrapped V-belt portions are connected by the tie band,
each of the wrapped V-belt portions includes a belt body and a cover fabric covering an outer surface of the belt body,
the belt body includes a tension member layer including a tension member, a tension rubber layer laminated on a belt outer peripheral side of the tension member layer, and a compression rubber layer laminated on a belt inner peripheral side of the tension member layer,
the tie band includes a short fiber-containing rubber layer in which a short fiber is oriented in a belt width direction, and
the short fiber-containing rubber layer includes a plurality of rib portions extending in a belt longitudinal direction.

According to an aspect [2] of the present invention, in the aspect [1], an arrangement pitch of the rib portions is smaller than an arrangement pitch of the wrapped V-belt portions.

According to an aspect [3] of the present invention, in the aspect [1] or [2], the arrangement pitch of the rib portions is larger than a width of a gap between adjacent wrapped V-belt portions.

According to an aspect [4] of the present invention, in any one of the aspects [1] to [3], the tie band includes the short fiber-containing rubber layer and a fabric layer, and the fabric layer includes a fibrous structure laminated on an inner peripheral surface of the short fiber-containing rubber layer.

According to an aspect [5] of the present invention, the fibrous structure according to the aspect [4] is a cord fabric including a plurality of first threads extending in a belt width direction and a plurality of second threads extending in a direction intersecting the belt width direction, and an arrangement density of the second threads is lower than an arrangement density of the first threads.

According to an aspect [6] of the present invention, in any one of the aspects [1] to [5], a center of a top portion of the rib portions is located at a gap between adjacent wrapped V-belt portions.

According to an aspect [7] of the present invention, in any one of the aspects [1] to [6], a thickness of the tie band is 0.3 to 0.7 times a thickness of the wrapped V-belt portions.

According to an aspect [8] of the present invention, a method for producing a joined V-belt according to any one of the aspects [1] to [7] is provided, the method includes:

connecting a plurality of wrapped V-belt portion precursors by a tie band precursor;

crosslinking and molding the connected wrapped V-belt portion precursors and tie band precursor by heating and pressurizing to obtain a crosslinked molded body; and

forming rib portions on an outer peripheral side of the crosslinked molded body.

ADVANTAGEOUS EFFECTS OF INVENTION

In the present invention, as described above, a tie band including a short fiber-containing rubber layer in which a short fiber is oriented in a belt width direction is used, and the short fiber-containing rubber layer includes a plurality of rib portions extending in a belt longitudinal direction. Therefore, it is possible to provide a joined V-belt of a connected type capable of performing double-sided transmission with high performance and capable of performing high-capacity transmission. Further, such a joined V-belt can be easily produced by a producing method in which a plurality of wrapped V-belt portion precursors are connected by a tie band precursor and rib portions are formed on an outer peripheral portion after crosslinking and molding.

BRIEF DESCRIPTION OF DRAWINGS

[FIG. 1] FIG. 1 is a schematic partial cross-sectional perspective view showing an example of a cut joined V-belt of the present invention.

[FIG. 2] FIG. 2 is a schematic partial sectional perspective view showing another example of the cut joined V-belt of the present invention.

[FIG. 3] FIG. 3 is a schematic partial cross-sectional perspective view showing still another example of the cut joined V-belt of the present invention.

[FIG. 4] FIG. 4 is a schematic partial cross-sectional perspective view showing another example of the cut joined V-belt of the present invention.

[FIG. 5] FIG. 5 is a schematic cross-sectional view illustrating a structure and size of a joined V-belt based on the joined V-belt of FIG. 2.

[FIG. 6] FIG. 6 is a schematic cross-sectional view of an example of a wrapped V-belt portion constituting the joined V-belt of the present invention.

[FIG. 7] FIG. 7 is a schematic cross-sectional view of another example of the wrapped V-belt portion constituting the joined V-belt of the present invention.

[FIG. 8] FIG. 8 is a schematic overall view showing a connecting step and a crosslinking molding step of a joined V-belt precursor.

[FIG. 9] FIG. 9 is a schematic cross-sectional view showing a state where a wrapped V-belt portion precursor and a tie band precursor are fitted into a pressing mold.

[FIG. 10] FIG. 10 is a schematic cross-sectional view showing a rib portion forming step of forming rib portions on an outer peripheral side of a crosslinked molded body.

[FIG. 11] FIG. 11 is a diagram showing a multiaxial layout which is an arrangement of a belt running test according to an example.

DESCRIPTION OF EMBODIMENTS

A joined V-belt of the present invention includes a plurality of wrapped V-belt portions arranged in a belt width direction, and a tie band (bonding member) that connects outer peripheral surfaces of the plurality of wrapped V-belt portions. The tie band includes a short fiber-containing rubber layer (crosslinked rubber composition) in which a short fiber is arranged (oriented) in a belt width direction. A plurality of rib portions extending in a belt longitudinal direction are formed on a belt outer peripheral side of the short fiber-containing rubber. The wrapped V-belt portion may have the same structure as that of a commonly used wrapped joined V-belt.

Hereinafter, the joined V-belt of the present invention will be described in detail with reference to the accompanying drawings.

In the following description, the same or similar elements (or members) may be denoted by the same reference numerals.

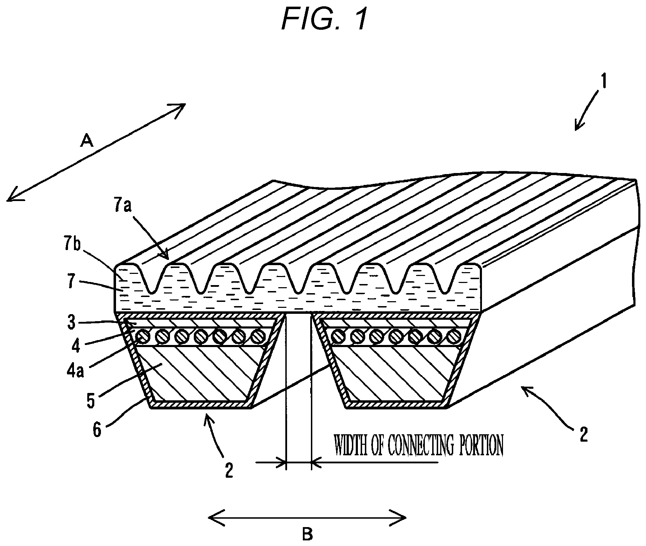

FIG. 1 shows an example of the joined V-belt of the present invention. As shown in FIG. 1, a joined V-belt 1 (Embodiment 1) includes two wrapped V-belt portions 2 arranged in parallel at an interval. Outer peripheral surfaces of the two wrapped V-belt portions 2 are connected to each other by a tie band (bonding member) 7 including a plurality of rib portions 7a extending in a belt longitudinal direction (peripheral length direction and A direction in the drawing). The tie band 7 is formed of a crosslinked rubber composition (short fiber-containing rubber layer) containing short fibers 7b oriented in a belt width direction (B direction in the drawing).

A cross-sectional shape of the rib portions 7a in the belt width direction is an inverted V shape (trapezoidal shape). In the joined V-belt 1, the plurality of rib portions 7a having such a cross-sectional shape are formed in parallel in the belt width direction, and V-shaped grooves are formed between adjacent rib portions 7a. On an outer peripheral surface of the tie band 7, a V-grooved pulley (V-ribbed pulley) comes into contact with the V-shaped grooves formed at intervals in this way. A bottom portion of the V-shaped groove of the rib portions 7a is located at a gap (connecting portion) between the adjacent wrapped V-belt portions 2.

Each of the wrapped V-belt portions 2 is formed of a belt body and a cover fabric 6 (weave, knitted fabric, nonwoven fabric, or the like). The belt body is formed of a tension rubber layer 3 on the belt outer peripheral side, a compression rubber layer 5 on a belt inner peripheral side, and a tension member layer 4 interposed between the tension rubber layer 3 and the compression rubber layer 5. The cover fabric 6 covers the periphery of the belt body over the entire length in a belt circumferential direction. That is, the cover fabric 6 covers an outer surface of the belt body. Tension members 4a extending along the belt longitudinal direction are embedded in the tension member layer 4. In this example, the tension members 4a are cords (twisted cords) arranged at a predetermined interval in the belt width direction (B direction in the drawing).

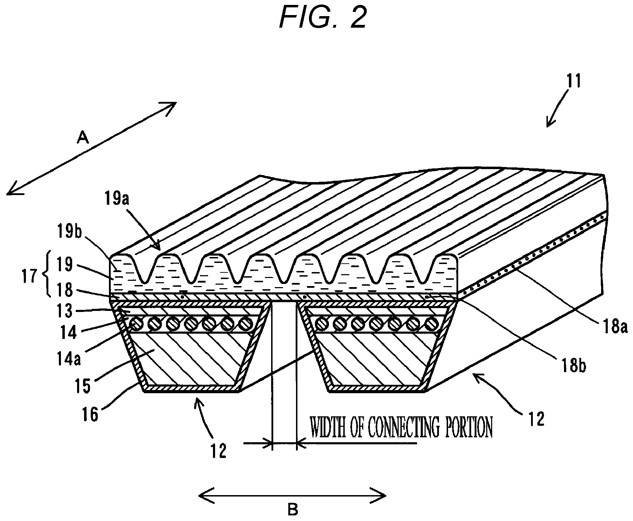

A joined V-belt (Embodiment 2) shown in FIG. 2 is a joined V-belt of the same aspect as the joined V-belt of FIG. 1, except that the tie band is formed of a laminate of a short fiber-containing rubber layer including a plurality of rib portions and a fabric layer laminated on an inner peripheral side of the short fiber-containing rubber layer. That is, in a joined V-belt 11, outer peripheral surfaces of the wrapped V-belt portions 12 in which the periphery of an endless belt body formed of the tension rubber layer 13, the tension member layer 14 in which the tension members 14a are embedded, and the compression rubber layer 15 is covered with the cover fabric 16 are connected by the tie band 17. The tie band 17 is formed of a fabric layer 18 in contact with outer peripheral surfaces of the wrapped V-belt portions 12 and a short fiber-containing rubber layer 19. The short fiber-containing rubber layer 19 is formed of a crosslinked rubber composition that is laminated on an outer peripheral surface of the fabric layer 18, includes a plurality of rib portions 19a, and includes short fibers 19b oriented in the belt width direction. The fabric layer 18 includes a fabric cord formed by warp yarns 18a and weft yarns 18b. In the joined V-belt, since the tie band includes the fabric layer, it is possible to prevent cutting (tear) at a connecting portion between the adjacent wrapped V-belt portions.

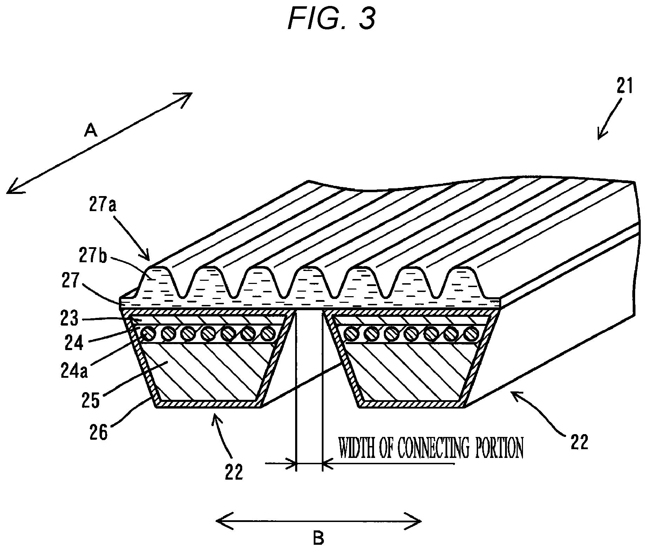

A joined V-belt (Embodiment 3) shown in FIG. 3 is a joined V-belt of the same aspect as the joined V-belt of FIG. 1 except that a structure of V-rib portions of the tie band is different. That is, in a joined V-belt 21, outer peripheral surfaces of the wrapped V-belt portions 22 in which the periphery of an endless belt body formed of the tension rubber layer 23, the tension member layer 24 in which the tension members 24a are embedded, and the compression rubber layer 25 is covered with the cover fabric 26 are connected by the tie band 27. Similarly to FIG. 1, the tie band 27 is formed of a crosslinked rubber composition (short fiber-containing rubber layer) including a plurality of rib portions 27a extending in the belt longitudinal direction and including short fibers 27b oriented in the belt width direction. However, unlike FIG. 1, a center of a top portion of the rib portions 27a is located at a gap between the adjacent wrapped V-belt portions 22. In the joined V-belt, the rib portions are formed to have a structure in which a center of a top portion of the rib portions is located at a gap (connecting portion) between the adjacent wrapped V-belt portions, so that the cutting can be prevented.

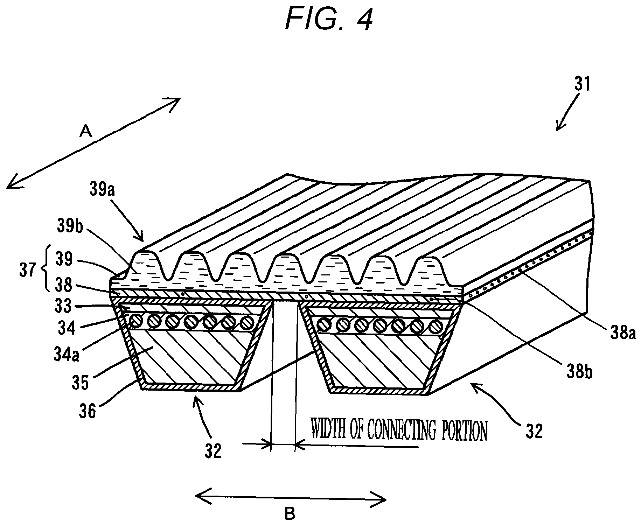

A joined V-belt (Embodiment 4) shown in FIG. 4 is a joined V-belt of the same aspect as the joined V-belt of FIG. 2 except that a structure of V-rib portions of the tie band is different. That is, in a joined V-belt 31, outer peripheral surfaces of wrapped V-belt portions 32 in which the periphery of an endless belt body formed of the tension rubber layer 33, the tension member layer 34 in which the tension members 34a are embedded, and the compression rubber layer 35 is covered with the cover fabric 36 are connected by the tie band 37. As in FIG. 2, the tie band 37 is in contact with the outer peripheral surfaces of the wrapped V-belt portions 32. The tie band 37 is formed of a fabric layer 38 and a short fiber-containing rubber layer 39. The fabric layer 38 includes a fabric cord formed by warp yarns 38a and weft yarns 38b. The short fiber-containing rubber layer 39 is formed of a crosslinked rubber composition that is laminated on an outer peripheral surface of the fabric layer 38, includes a plurality of rib portions 39a, and includes short fibers 39b oriented in the belt width direction. However, unlike FIG. 2, a center of a top portion of the rib portions 38a is located at a gap (connecting portion) between the adjacent wrapped V-belt portions 32 as in FIG. 3. In the joined V-belt, the tie band includes the fabric layer, and the rib portions are formed to have a structure in which the center of the top portion of the rib portions is located in the gap (connecting portion) between the adjacent wrapped V-belt portions, so that the cutting can be highly prevented.

The number of wrapped V-belt portions is not limited to two as shown in FIGS. 1 to 4, and may be two or more, for example, 2 to 10, preferably 2 to 8, and more preferably 2 to 6. Adjacent wrapped V-belt portions may be aligned in parallel to a longitudinal direction, and are not limited to an aspect of being aligned at intervals as shown in FIGS. 1 to 4, and may be aligned without intervals. From the viewpoint of productivity and the like, adjacent wrapped V-belt portions are preferably arranged at intervals.

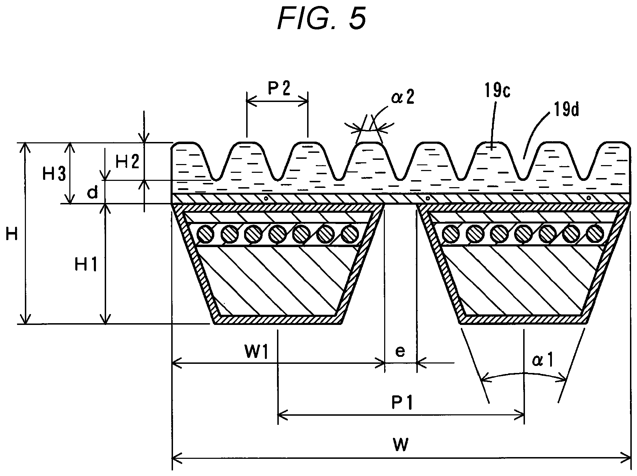

The structure and size of the joined V-belt of the present invention will be described with reference to FIG. 5. FIG. 5 is a schematic cross-sectional view similar to FIG. 2. In FIG. 5, each symbol is defined as follows. H indicates a belt thickness (thickness of the joined V-belt). H1 indicates a thickness of a wrapped V-belt portion. H2 indicates a height of a rib portion on a belt back face. H3 indicates a thickness (thickness of the maximum thickness portion) of a tie band (T). The symbol d indicates a thickness of the base portion (minimum thickness portion) of the tie band (T). W indicates a belt width (width of the joined V-belt). W1 indicates a width (upper width) of the wrapped V-belt portion. P1 indicates an arrangement pitch of the wrapped V-belt portions (distance between the centers in the belt width direction of the adjacent wrapped V-belt portions). P2 indicates an arrangement pitch of the rib portions (distance between centers in the belt width direction of the adjacent rib portions, that is, a pitch of rib peaks 19c adjacent to each other across a rib valley 19d). The symbol e indicates a width of a connecting portion (interval or gap between adjacent wrapped V-belt portions).

When adjacent wrapped V-belt portions are arranged at intervals, an interval (width of the connecting portion) (e) between the adjacent wrapped V-belt portions is a dimension value obtained by subtracting an upper width (W1) of each wrapped V-belt portion from an arrangement pitch (P1) of each wrapped V-belt portion, and is, for example, 1.3 mm to 3.0 mm. As shown in FIGS. 1 to 4, the tie band is in contact with the entire outer peripheral surfaces of the wrapped V-belt portions, and is integrated with the wrapped V-belt portions to connect the plurality of wrapped V-belt portions.

With respect to sizes shown in FIG. 5, dimensions of an A-shape, a B-shape, and a C-shape, which are representative examples of the joined V-belt of the present invention, are shown in Table 1. In Table 1, the dimensions in parentheses indicate maximum values of dimensions required in the case where a tie band does not further include a fabric layer including a fibrous structure (that is, the case where the tie band is formed only of a short fiber-containing rubber layer (Embodiments 1 and 3)). In addition, in the present application, the numerical values in Table 1 are merely numerical values of the representative examples, and the respective dimensions are not limited to these values.

Table 1

| Belt shape | H (mm) | H1 (mm) | H2 (mm) | H3 (mm) | d (mm) | Number of V-belt portions | W (mm) | W1 (mm) | P1 (mm) | P2 (mm) | e (mm) |
|---|---|---|---|---|---|---|---|---|---|---|---|
| A | 12.3 (13.0) | 8.4 | 2.5 | 3.9 (4.6) | 1.4 (2.1) | 2 to 9 | 29.1 to 140.4 | 13.2 | 15.9 | 3.975 | 2.7 |
| B | 15.4 (16.1) | 10.8 | 2.8 | 4.6 (5.3) | 1.8 (2.5) | 2 to 8 | 36.4 to 150.4 | 17.4 | 19.0 | 4.750 | 1.6 |
| C | 18.2 (18.9) | 12.9 | 2.9 | 5.3 (6.0) | 2.4 (3.1) | 2 to 7 | 48.3 to 175.3 | 22.9 | 25.4 | 6.350 | 2.5 |

Considering the balance between the high rigidity (side pressure resistance) in the belt width direction and the flexibility toward the belt inner peripheral side, a thickness (H3) of the tie band is preferably smaller than a thickness (H1) of the wrapped V-belt portion although depending on an internal structure of the tie band and a position of the tension member layer in a belt thickness direction.

A ratio (H3/H1) of the thickness (H3) of the tie band to the thickness (H1) of the wrapped V-belt portion can be selected from a range of about 0.25 to 0.75, for example, 0.3 to 0.7, preferably 0.3 to 0.6, more preferably 0.4 to 0.6, more preferably 0.4 to 0.5, and most preferably 0.42 to 0.48, and a thickness of the tie band is particularly preferably about half a thickness of the wrapped V-belt portion. If H3/H1 is too small, the power-transmission performance may decrease. On the other hand, if H3/H1 is too large, durability may decrease.

On the other hand, from the viewpoint of ensuring the flexibility (the reverse bendability of the belt) toward the belt outer peripheral side, although depending on an internal structure of each wrapped V-belt portion (in particular, a position of the tension member layer in the belt thickness direction), a thin V-belt (H1/W is, for example, 0.5 to 0.7) having a relatively small ratio (H1/W) of the thickness (H1) of the V-belt portion to the upper width (W) is preferable. In the thin V-belt, belt shapes (representative examples) suitable for a general V-grooved pulley (V-ribbed pulley) are the A-shape, the B-shape, and the C-shape.

Since the tie band on the belt outer peripheral side (back face side) includes specific rib portions extending in the belt longitudinal direction, the joined V-belt of the present invention is characterized in that highly efficient transmission with high-capacity can be performed even on the back face side. Therefore, when a contact area of a V-shaped cross-sectional groove capable of coming into contact with a V-shaped side face (frictional power-transmission flank) of a back face driven pulley (V-ribbed pulley) is increased, highly efficient transmission with high-capacity can be performed on a belt outer peripheral surface. However, when the contact area is increased, the side pressure resistance is insufficient, cracks are likely to enter, and durability performance may decrease. Therefore, it is important to design the rib portions on the belt back face in order to balance both characteristics.

A height (H2) of the rib portion on the belt back face is, for example, 0.5 mm to 10 mm, preferably 0.7 mm to 6 mm, more preferably 1 mm to 5 mm, more preferably 1.5 mm to 4 mm, and most preferably 2 mm to 3 mm.

An arrangement pitch (P2) of the rib portions on the belt back face is, for example, 1.5 mm to 19 mm, preferably 2 mm to 13 mm, more preferably 3 mm to 10 mm, more preferably 3.5 mm to 7 mm, and most preferably 3.8 mm to 5 mm.

Further, in consideration of the fact that both the side pressure resistance and the flexibility are compatible with each other and that both the power-transmission performance on the belt back face (the contact area with the back face driven pulley of the frictional power-transmission flank at the belt outer peripheral side and the wedge effect) are ensured and the cutting is prevented, the arrangement pitch (P2) of the rib portions is preferably smaller than the arrangement pitch (P1) of the wrapped V-belt portions. The arrangement pitch (P2) of the rib portions is preferably larger than a width (e) of the connecting portion, that is, a width of the gap between the adjacent wrapped V-belt portions. The rib portion is formed such that a volume (cross-sectional area) of the rib portion becomes larger in a similar manner as the size (belt shape) of the joined V-belt becomes larger in the A-shape, the B-shape, and the C-shape (as the power-transmission capacity increases). It is necessary that a ratio of the height (H2) of the rib portion to the thickness (H1) of the wrapped V-belt portion and a ratio (P1/P2) of the arrangement pitch (P1) of the wrapped V-belt portions to the arrangement pitch (P2) of the rib portions are appropriately set and the overall balance is obtained.

A ratio (H2/H1) of the height (H2) of the rib portion to the thickness (H1) of the wrapped V-belt portion, which is a length ratio in the belt thickness direction, is, for example, 0.1 to 0.5 (for example, 0.15 to 0.35), preferably 0.12 to 0.4 (for example, 0.19 to 0.33), more preferably 0.21 to 0.32, and still more preferably 0.25 to 0.3. If the ratio H2/H1 is too small, the power-transmission performance on the belt back face may decrease. On the other hand, if the ratio H2/H1 is too large, the flexibility may decrease.

An arrangement pitch ratio (P1/P2) of the wrapped V-belt portions to the rib portions can be selected from a range of about 1 to 8 (particularly, 1.5 to 7). The ratio P1/P2 is preferably an integer from the viewpoint of productivity and the like, and is, for example, an integer of 2 to 6, preferably 3 to 5, more preferably 3.5 to 4.5, and still more preferably 4. If P1/P2 is too small, the power-transmission performance on the belt back face may decrease. On the other hand, if P1/P2 is too large, the side pressure resistance may decrease.

The thickness (H1) of the wrapped V-belt is, for example, 4 mm to 20 mm, preferably 5 mm to 15 mm, more preferably 6 mm to 12 mm, more preferably 7 mm to 10 mm, and most preferably 8 mm to 9 mm.

The thickness (H3) of the tie band is, for example, 2 mm to 10 mm, preferably 2.5 mm to 7 mm, more preferably 3 mm to 6 mm, more preferably 3.5 mm to 5 mm, and most preferably 3.8 mm to 4.7 mm.

A cross-sectional shape of the plurality of rib portions is not particularly limited and may be any shape as long as the cross-sectional shape is an inverted V-shaped (trapezoidal) cross-section formed in an endless shape by a plurality of V-shaped cross-sectional grooves extending in the belt longitudinal direction at intervals in the belt width direction. Both left and right side faces (inverted V-shaped side faces) of the inverted V-shaped (trapezoidal) cross-section are frictional power-transmission flanks.

In the back face driven pulley driven via the frictional power-transmission flank, an outer peripheral portion facing the plurality of rib portions on the belt back face is a V-shaped (inverted trapezoidal) cross-section formed in an endless shape from a plurality of V-shaped protruding ridges extending in the peripheral length direction at intervals in a pulley width direction. The back face driven pulley is a pulley (referred to as a "V-ribbed pulley" in the present application) configured such that both left and right side faces (V-shaped side faces) of the V-shaped (inverted trapezoidal) cross-section serve as frictional power-transmission flanks in contact with the belt.

<Wrapped V-belt Portion>

The wrapped V-belt portion (hereinafter, also referred to as "V-belt portion") connected to the tie band (bonding member) is not particularly limited. As in the V-belt portion shown in FIGS. 1 to 4, the wrapped V-belt portion may be a commonly used V-belt portion, that is, a V-belt portion including a tension member layer (adhesion rubber layer) including a tension member (cord), a tension rubber layer laminated on a belt outer peripheral side of the tension member layer, and a compression rubber layer laminated on a belt inner peripheral side of the tension member layer, and having an endless V-shaped cross-section. Both left and right side faces (V-shaped side faces) of the V-shaped cross-section are frictional power-transmission flanks. In the V-shaped cross-section, a side with a wide belt width is referred to as an outer peripheral side, and a side with a narrow belt width is referred to as an inner peripheral side. A V-belt angle ($\alpha$1) of the V-shaped side face is, for example, 35° to 45°, preferably 36° to 44°, more preferably 37° to 43°, more preferably 38° to 42°, and most preferably 39° to 41° (particularly 40°) with respect to the belt thickness direction.

A commonly used wrapped V-belt portion is not particularly limited as long as it is a wrapped V-belt portion in which the periphery of the V-shaped cross-section including the frictional power-transmission flank is covered with a cover fabric over the entire length in the belt peripheral length direction.

In applications such as agricultural machines, a belt or a power-transmission mechanism as a whole is likely to be damaged by a high friction coefficient of a power-transmission flank, the stress or the impact caused by the entrainment of the waste straw, stone, wood, or the like. Therefore, as a V-belt portion, a wrapped V-belt which has a small friction coefficient of a power-transmission flank and can reduce stress or impact by appropriate slip is often used. In such a high-load application, high rigidity (side pressure resistance) in the belt width direction is also required to prevent buckling deformation (dishing). Therefore, the V-belt portion may be, for example, a wrapped V-belt portion having excellent side pressure resistance described in JP2020-3061A (Patent Document 4), that is, a wrapped V-belt portion having a laminated structure including two types of compression rubber layers having different rubber hardness, and having a rubber hardness adjusted for each layer. When the V-belt portion having excellent side pressure resistance is combined with the tie band, it is possible to further improve the effect of preventing cutting (tear).

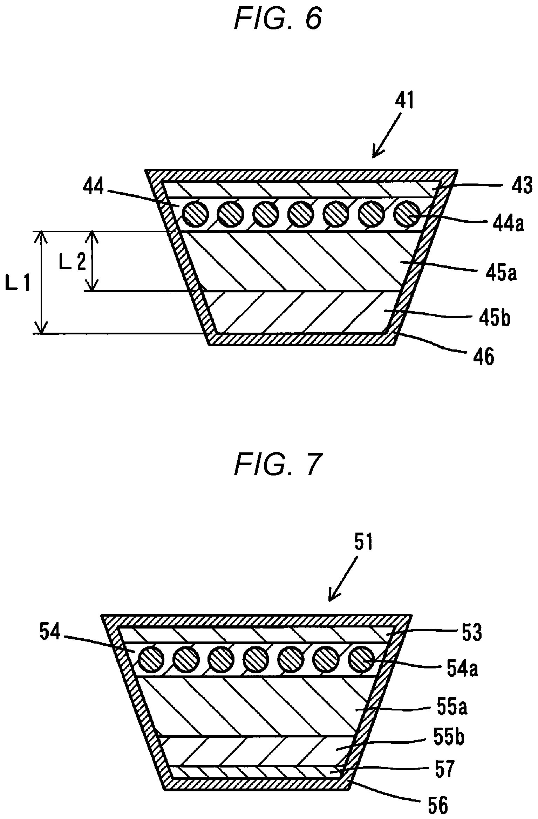

Specifically, FIG. 6 is a schematic cross-sectional view of an example of a V-belt portion constituting the joined V-belt of the present invention (drawing in which the tie band is omitted and only the V-belt portion is closed-up). The wrapped V-belt portion 41 shown in FIG. 6 is formed of an endless belt body in which a tension rubber layer 43, a tension member layer (adhesion rubber layer) 44 in which a tension member 44a is embedded in a crosslinked rubber composition, a first compression rubber layer 45a, and a second compression rubber layer 45b are sequentially laminated from a belt outer peripheral side, and a cover fabric 46 (weave, knitted fabric, nonwoven fabric, or the like) that covers the periphery of the belt body over the entire length in a belt circumferential direction. As in a wrapped V-belt portion shown in FIG. 7 to be described later, a reinforcing fabric layer may be further included between an inner peripheral surface (surface at an inner peripheral side) of the compression rubber layer and the cover fabric.

In these examples, the tension member is a cord (twisted cord) arranged at a predetermined interval in the belt width direction. The tension member layer is formed of a crosslinked rubber composition (adhesion rubber layer) in which a tension member is embedded. The tension member layer may include a tension member, and may be formed of only a tension member disposed at an interface between the tension rubber layer and the compression rubber layer. In the present application, when the tension member layer is formed of only the tension member, the tension member disposed at intervals in the belt body is referred to as a tension member layer. Such a tension member layer includes not only a form in which the tension member is disposed at the interface between the tension rubber layer and the compression rubber layer, but also a form in which a part or all of the tension member disposed at the interface between the tension rubber layer and the compression rubber layer is embedded in the tension rubber layer or the compression rubber layer during manufacturing.

[Compression Rubber Layer and Tension Rubber Layer]

The compression rubber layer constituting each V-belt portion may be a single layer (one layer) as shown in FIGS. 1 to 4, or may be a rubber layer having a laminated structure including two types of rubber layers as shown in FIG. 6 and having an adjusted rubber hardness and strength of each layer.

From the viewpoint of achieving both side pressure resistance and flexibility, the V-belt portion preferably includes a laminated structure of two or more layers including a first compression rubber layer which is laminated on a tension member layer side and a second compression rubber layer in which a rubber hardness is lower than that of the first compression rubber layer and which is laminated on the belt inner peripheral side. In the laminated structure, the compression rubber layer and the tension rubber layer do not have to be in the same form, and may be in different forms.

Considering the balance between the side pressure resistance and the productivity, the compression rubber layer particularly preferably includes a two-layer structure (first compression rubber layer and second compression rubber layer), and the tension rubber layer particularly preferably includes a single-layer structure.

(Single-Layer Structure)

When the tension rubber layer includes a single-layer structure, the rubber hardness Hs of the compression rubber layer and the tension rubber layer can be selected from a range of, for example, about 60° to 90°, preferably from 72° to 80°, more preferably from 73° to 78°, still more preferably from 74° to 78°, and most preferably from 75° to 77°. If the rubber hardness is too small, the side pressure resistance may decrease. On the other hand, if the rubber hardness is too large, the flexibility may decrease.

In the present application, the rubber hardness of each rubber layer indicates a value Hs (type A) measured using a type A durometer in accordance with a spring type durometer hardness test specified in JIS K6253 (2012) (vulcanized rubber and thermoplastic rubber - hardness determining method -). The rubber hardness of each rubber layer may be simply referred to as rubber hardness. Specifically, the rubber hardness of each rubber layer can be measured by a method described in Examples to be described later.

A tensile strength of the compression rubber layer and the tension rubber layer is, for example, 12 MPa to 20 MPa, preferably 13 MPa to 18 MPa, and more preferably about 14 MPa to 17 MPa in the belt width direction. If the tensile strength is too small, the side pressure resistance may decrease. On the other hand, if the tensile strength is too large, the flexibility may decrease.

In the present application, the tensile strength of each rubber layer is a value of a tensile strength T of each rubber layer that can be measured by a method in accordance with JIS K6251 (2017). Specifically, the tensile strength of each rubber layer can be measured by a method described in Examples to be described later.

(Two-layer Structure)

In order to improve the side pressure resistance, when the compression rubber layer includes a two-layer structure, it is preferable that the first compression rubber layer and the tension rubber layer disposed on the tension member layer side be a high hardness rubber layer. The rubber hardness Hs of each of the first compression rubber layer and the tension rubber layer can be selected from, for example, a range of about 80° to 100°, preferably 85° to 95°, more preferably 87° to 94°, still more preferably 90° to 93°, and most preferably 92° to 93°. If the rubber hardness is too small, the side pressure resistance may decrease. On the other hand, if the rubber hardness is too large, the fit to a pulley groove and the flexibility may decrease.

On the other hand, the rubber hardness Hs of the second compression rubber layer may be substantially the same as the rubber hardness Hs shown in the case where the compression rubber layer includes a single-layer structure.

Further, a difference in rubber hardness Hs between the first compression rubber layer and the second compression rubber layer [(rubber hardness of the first compression rubber layer) - (rubber hardness of the second compression rubber layer)] may be, for example, 1° or more (particularly 5° or more), preferably 5° to 30° (for example, 7° to 27°), more preferably 10° to 25° (for example, 12° to 20°), still more preferably 14° to 20° (for example, 15 to 19°), and most preferably 14° to 18° (particularly 15° to 17°). If the difference in the rubber hardness Hs is too small, the flexibility may decrease.

A tensile strength of the first compression rubber layer is, for example, 25 MPa to 50 MPa, preferably 25 MPa to 40 MPa, more preferably 26 MPa to 35 MPa, and most preferably 28 MPa to 32 MPa in the belt width direction. If the tensile strength is too small, the side pressure resistance may decrease. On the other hand, if the tensile strength is too large, the flexibility may decrease. A tensile strength of the second compression rubber layer may be substantially the same as the tensile strength shown in the case where the compression rubber layer includes a single-layer structure.

A tensile strength of the tension rubber layer can also be selected from the same range as the tensile strength of the compression rubber layer, including the preferable range.

An average thickness (L2 in FIG. 6) of the first compression rubber layer can be selected from a range of, for example, about 95% to 30%, preferably 90% to 50%, more preferably 85% to 55%, still more preferably 80% to 60%, and still more preferably 75% to 70%, with respect to an average thickness (L1 in FIG. 6) of the entire compression rubber layer. The ratio (L2/L1) may be a ratio in the case where the compression rubber layer includes only the first compression rubber layer and the second compression rubber layer (in the case of a two-layer structure). If the ratio (L2/L1) is too small, the side pressure resistance may decrease. On the other hand, if the ratio (L2/L1) is too large, the flexibility may decrease.

(Another Rubber Layer in Compression Rubber Layer)

The compression rubber layer may further include another rubber layer having a different rubber hardness in addition to the first compression rubber layer and the second compression rubber layer. The another rubber layer may be of a single layer or a plurality of layers. The another rubber layer may be laminated on any surface of upper and lower surfaces of the first compression rubber layer or a lower surface of the second compression rubber layer. An average thickness of the another rubber layer (total thickness when the another rubber layer includes a plurality of layers) may be, for example, 30% or less, preferably 10% or less, and more preferably 5% or less, with respect to the average thickness of the entire compression rubber layer. That is, the compression rubber layer preferably includes the first compression rubber layer and the second compression rubber layer as main layers. A total average thickness of the first compression rubber layer and the second compression rubber layer may be, for example, 70% or more, preferably 90% or more, and more preferably 95% or more, with respect to the average thickness of the entire compression rubber layer. The compression rubber layer preferably includes only the first compression rubber layer and the second compression rubber layer.

(Thickness of Entire Compression Rubber Layer and Tension Rubber Layer)

The average thickness of the entire compression rubber layer is, for example, 1 mm to 12 mm, preferably 2 mm to 10 mm, more preferably 2.5 mm to 9 mm, and still more preferably 3 mm to 8 mm. An average thickness of the entire tension rubber layer is, for example, 0.5 mm to 10 mm (for example, 0.5 mm to 1.5 mm), preferably 0.6 mm to 5 mm (for example, 0.7 mm to 1 mm).

(Crosslinked Rubber Composition of Compression Rubber Layer and Tension Rubber Layer)

Each of the compression rubber layer and the tension rubber layer may be formed of a crosslinked rubber composition commonly used as a rubber composition of a wrapped V-belt. The crosslinked rubber composition may be a crosslinked rubber composition containing a rubber component, and by appropriately adjusting the composition of the crosslinked rubber composition, a rubber hardness and the like of each layer constituting each of the compression rubber layer and the tension rubber layer, particularly the first compression rubber layer and the second compression rubber layer, can be adjusted. A method for adjusting the rubber hardness and the like is not particularly limited. The rubber hardness may be adjusted by changing compositions and/or types of components constituting the composition, and from the viewpoint of convenience and the like, it is preferable to adjust the rubber hardness by changing proportions and/or types of a short fiber and a filler.

(A) Rubber Component

A rubber component (A) contained in the crosslinked rubber composition of the compression rubber layer and the tension rubber layer can be selected from known vulcanized or crosslinkable rubbers and/or elastomers. Examples of the rubber component (A) include a diene rubber [a natural rubber, an isoprene rubber, a butadiene rubber, a chloroprene rubber (CR), a styrene-butadiene rubber (SBR), a vinylpyridine-styrene-butadiene copolymer rubber, an acrylonitrile-butadiene rubber (nitrile rubber), a hydrogenated product of the diene rubber such as a hydrogenated nitrile rubber (containing a mixed polymer of a hydrogenated nitrile rubber and an unsaturated carboxylic acid metal salt), and the like], an olefin rubber [an ethylene-$\alpha$-olefin rubber (an ethylene-$\alpha$-olefin elastomer), a polyoctenylene rubber, an ethylene-vinyl acetate copolymer rubber, a chlorosulfonated polyethylene rubber, an alkylated chlorosulfonated polyethylene rubber, and the like], an epichlorohydrin rubber, an acrylic rubber, a silicone rubber, a urethane rubber, and a fluorine rubber. These rubber components may be used alone or in combination of two or more kinds thereof.

Among these, an ethylene-$\alpha$-olefin elastomer [ethylene-$\alpha$-olefin rubber such as an ethylene-propylene copolymer (EPM) and an ethylene-propylene-diene terpolymer (EPDM)] and chloroprene rubber are widely used from the viewpoint of easily diffusing the crosslinking agent and the crosslinking accelerator. In particular, when the rubber component (A) is used in a high-load environment, chloroprene rubber and EPDM are preferable from the viewpoint of excellent balance of mechanical strength, weather resistance, heat resistance, cold resistance, oil resistance, adhesiveness, and the like. Further, the chloroprene rubber is particularly preferable from the viewpoint of excellent wear resistance in addition to the above properties. The chloroprene rubber may be a sulfur-modified rubber or a non-sulfur-modified rubber.

When the rubber component (A) contains the chloroprene rubber, a proportion of the chloroprene rubber in the rubber component (A) may be, for example, 50% by mass or more (particularly about 80% by mass to 100% by mass), and particularly preferably 100% by mass (only chloroprene rubber).

(B) Short Fiber

The crosslinked rubber composition may further contain a short fiber (B) in addition to the rubber component (A). Examples of the fiber constituting the short fiber (B) include: synthetic fibers such as polyolefin fibers (polyethylene fibers, polypropylene fibers, and the like), polyamide fibers [aliphatic polyamide fibers (nylon fibers) such as polyamide 6 fibers, polyamide 66 fibers and polyamide 46 fibers, and aramid fibers and the like], polyalkylene allylate fibers [for example, $C_{2-4}$ alkylene $C_{8-14}$ arylate fibers such as polyethylene terephthalate (PET) fibers, polytrimethylene terephthalate (PTT) fibers, polybutylene terephthalate (PBT) fibers, and polyethylene naphthalate (PEN) fibers, and the like], vinyl alcohol fibers (polyvinyl alcohol fibers, ethylene-vinyl alcohol copolymer fibers, vinylon fibers, and the like), and polyparaphenylene benzobisoxazole (PBO) fibers; cellulose fibers (cellulose fibers such as cotton and hemp, fibers of cellulose derivatives, and the like); natural or semi-synthetic fibers such as wool; and inorganic fibers such as carbon fibers. These short fibers may be used alone or in combination of two or more kinds thereof.

Among these short fibers, synthetic fibers and natural fibers, in particular, synthetic fibers such as polyester fibers (polyalkylene arylate fibers) and polyamide fibers (aramid fibers and the like) having $C_{2-4}$ alkylene-$C_{8-14}$ allylate such as ethylene terephthalate and ethylene-2,6-naphthalate as main constituent units, cellulose fibers such as cotton fibers, and inorganic fibers such as carbon fibers are widely used. Among these short fibers, fibers having high strength and high modulus, such as polyester fibers (particularly, polyethylene terephthalate fibers and polyethylene naphthalate fibers), polyamide fibers (particularly, aramid fibers), and cellulose fibers (particularly cotton fibers) are preferred. Aramid fibers also have high wear resistance. Therefore, the short fiber preferably contains at least all aromatic polyamide fibers such as aramid fibers. A proportion of the aramid fiber may be 1 mass% or more (for example, 5 mass% to 100 mass%) in the short fiber. The aramid fiber may be a commercially available product, for example, under trade names "Conex", "Nomex", "Kevlar", "Technora", and "Twaron".

An average fiber diameter of the short fiber (B) is, for example, 2 μm or more, preferably 2 μm to 100 μm, more preferably 3 μm to 50 μm (for example, 5 μm to 50 μm), still more preferably 7 μm to 40 μm, and still more preferably 10 μm to 30 μm. An average fiber length of the short fiber is, for example, 1 mm to 20 mm, preferably 1.5 mm to 10 mm, more preferably 2 mm to 5 mm, and more preferably 2.5 mm to 4 mm.

In the present application, the average fiber diameter and the average length of the short fiber (B) can be obtained by, for example, measuring fiber diameters and lengths of the randomly selected 10 short fibers using a scanning electron microscope or the like, and calculating a phase average value.

From the viewpoint of dispersibility and adhesiveness of the short fiber (B) in the crosslinked rubber composition, the short fiber (B) may be subjected to an adhesion treatment (or surface treatment) by a commonly used method. Examples of the surface treatment method include a method of treating with a treatment liquid containing a commonly-used surface treatment agent. Examples of the surface treatment agent include an RFL liquid containing resorcin (R), formaldehyde (F), and rubber or latex (L) [for example, an RFL liquid in which resorcin (R) and formaldehyde (F) form a condensate (RF condensate) and which contains the rubber or latex (L) such as a vinyl pyridine-styrene-butadiene copolymer rubber], an epoxy compound, a polyisocyanate compound, a silane coupling agent, and a crosslinked rubber composition (for example, a crosslinked rubber composition containing, for example, wet white carbon containing a surface silanol group and containing, as a main component, hydrous silicic acid which is advantageous for increasing the chemical bonding force with rubber, or the like). These surface treatment agents may be used alone or in combination of two or more kinds thereof, or the short fiber may be treated with the same or different surface treatment agents a plurality of times.

The short fiber (B) may be embedded in the compression rubber layer and/or the tension rubber layer in a state of being oriented in the belt width direction in order to prevent compression deformation of the belt against pressing from the pulley.

A proportion of the short fiber (B) can be selected from a range of about 50 parts by mass or less, for example, 30 parts by mass or less, preferably 10 parts by mass to 30 parts by mass, with respect to 100 parts by mass of the rubber component (A). If the proportion of the short fiber (B) is too large, the rubber hardness may be too high and the flexibility may decrease.

When the compression rubber layer includes a two-layer structure, a proportion of the short fiber in the first compression rubber layer is, for example, 5 parts by mass to 50 parts by mass, preferably 10 parts by mass to 30 parts by mass, more preferably 15 parts by mass to 25 parts by mass, and still more preferably 18 parts by mass to 22 parts by mass, with respect to 100 parts by mass of the rubber component (first rubber component). A proportion of the short fiber in the second compression rubber layer is, for example, 30 parts by mass or less, preferably 20 parts by mass or less, and more preferably 10 parts by mass or less, with respect to 100 parts by mass of the rubber component (second rubber component). When the compression rubber layer is formed of a single layer, a proportion of the short fiber of the tension rubber layer may be the same as a proportion of the short fiber of the compression rubber layer. When the compression rubber layer includes a two-layer structure, the proportion of the short fiber of the tension rubber layer may be the same as the proportion of the short fiber of the first compression rubber layer.

(C) Filler

The crosslinked rubber composition may further contain a filler (C) in addition to the rubber component (A). Examples of the filler include carbon black, silica, clay, calcium carbonate, talc, and mica. The filler often contains a reinforcing filler, and such a reinforcing filler may be carbon black, reinforcing silica, or the like. In general, the reinforcing property of silica is smaller than the reinforcing property of carbon black. These fillers may be used alone or in combination of two or more kinds thereof. In the present disclosure, in order to improve the side pressure resistance, a reinforcing filler is preferred, and carbon black is particularly preferred.

An average particle diameter (number average primary particle diameter) of the carbon black is, for example, 5 nm to 200 nm, preferably 10 nm to 150 nm, and more preferably 15 nm to 100 nm. From the viewpoint of high reinforcing effect, the carbon black may have a small particle diameter, and the average particle diameter of the carbon black is, for example, 5 nm to 38 nm, preferably 10 nm to 35 nm, and more preferably 15 nm to 30 nm. Examples of the carbon black having a small particle diameter include SAF, ISAF-HM, ISAF-LM, HAF-LS, HAF, and HAF-HS. SAF, ISAF, and HAF are classifications of carbon black in the related art, and each correspond to carbon black having a small particle diameter called hard carbon. Specifically, an average particle diameter of SAF is 19 nm, an average particle diameter of ISAF is 22 nm, and an average particle diameter of HAF is 28 nm. These kinds of carbon black may be used alone or in combination of two or more kinds thereof.

In the present application, the average particle diameter of the carbon black can be obtained by, for example, measuring particle diameters of 10 randomly selected primary particles using a transmission electron microscope or the like, and calculating an arithmetic mean value.

A proportion of the filler (C) (particularly, carbon black) is, for example, 10 parts by mass to 100 parts by mass, preferably 12 parts by mass to 80 parts by mass, more preferably 15 parts by mass to 70 parts by mass, and still more preferably 20 parts by mass to 60 parts by mass, with respect to 100 parts by mass of the rubber component (A).

When the compression rubber layer includes a two-layer structure, a proportion of filler (particularly, carbon black) in the first compression rubber layer is, for example, 10 parts by mass to 100 parts by mass, preferably 20 parts by mass to 80 parts by mass, more preferably 30 parts by mass to 70 parts by mass, and still more preferably 40 parts by mass to 60 parts by mass, with respect to 100 parts by mass of the rubber component (first rubber component). A proportion of filler (particularly, carbon black) in the second compression rubber layer is, for example, 5 parts by mass to 80 parts by mass, preferably 10 parts by mass to 60 parts by mass, more preferably 15 parts by mass to 50 parts by mass, and still more preferably 20 parts by mass to 40 parts by mass, with respect to 100 parts by mass of the rubber component (second rubber component). When the compression rubber layer is formed of a single layer, a proportion of the filler in the tension rubber layer may be the same as a proportion of the filler in the compression rubber layer. When the compression rubber layer includes a two-layer structure, a proportion of the filler in the tension rubber layer may be the same as the proportion of the filler in the first compression rubber layer.

In any of the compression rubber layer and the tension rubber layer, a proportion of the carbon black may be, for example, 50% by mass or more, preferably 80% by mass or more, more preferably 90% by mass or more, and may be 100% by mass, with respect to the entire filler. If the proportion of the carbon black to the entire filler is too small, the rubber hardness of the compression rubber layer and the tension rubber layer may decrease.

(D) Other Additive

The crosslinked rubber composition may contain, if necessary, a crosslinking agent (or vulcanization agent), a co-crosslinking agent (crosslinking aid), a crosslinking accelerator, a crosslinking retardant, metal oxides (such as calcium oxide, barium oxide, iron oxide, copper oxide, titanium oxide, or aluminum oxide), a softener (oils such as paraffin oil and naphthene oil), a processing agent, a processing aid (such as an aliphatic acid such as a stearic acid, an aliphatic acid metal salt such as a metal stearate, an aliphatic acid such as a stearylamide, a wax, or a paraffin), an adhesiveness-improving agent [for example, a resorcinol-formaldehyde co-condensate (RF condensate), an amino resin (a condensate of a nitrogen-containing cyclic compound and formaldehyde, for example, a melamine resin such as hexamethylol melamine and hexaalkoxymethyl melamine (such as hexamethoxymethyl melamine, and hexabutoxymethyl melamine), an urea resin such as methylol urea, and a benzoguanamine resin such as a methylol benzoguanamine resin), a co-condensate thereof (such as a resorcin-melamine-formaldehyde co-condensate)], an anti-aging agent (such as an antioxidant, a heat antiaging agent, a bending anticracking agent, and an ozone deterioration agent), a plasticizer [an aliphatic carboxylic acid plasticizer (such as an azic acid ester plasticizer, and a sebacic acid ester plasticizer), an aromatic carboxylic acid ester plasticizer (such as a phthalic acid ester plasticizer, and a trimellitic acid ester plasticizer), an oxycarboxylic acid ester plasticizer, a phosphoric acid ester plasticizer, an ether plasticizer, an ether ester plasticizer, and the like], a colorant, a tackifier, a lubricant, a coupling agent (such as a silane coupling agent), a stabilizer (such as an ultraviolet absorbent and a thermal stabilizer), a flame retardant, and an antistatic agent as the other additive (D). The metal oxides may act as crosslinking agents. In the adhesiveness-improving agent, the resorcinol-formaldehyde co-condensate and the amino resin may be an initial condensate (prepolymer) of resorcin and/or a nitrogen-containing cyclic compound (melamine) and formaldehyde.

As the crosslinking agent, a commonly-used component can be used depending on the type of the rubber component (A), and examples thereof may include metal oxides (magnesium oxide, zinc oxide, lead oxide, and the like), organic peroxides (diacyl peroxide, peroxy ester, dialkyl peroxide, and the like), and sulfur crosslinking agents. Examples of the sulfur crosslinking agent include a powdered sulfur, a precipitated sulfur, a colloidal sulfur, an insoluble sulfur, a highly dispersible sulfur, and a sulfur chloride (sulfur monochloride, sulfur dichloride, and the like). These crosslinking agents may be used alone or in combination of two or more kinds thereof. When the rubber component is chloroprene rubber, a metal oxide (magnesium oxide, zinc oxide, or the like) may be used as a crosslinking agent. The metal oxides may be used in combination with the other crosslinking agents (for example, sulfur crosslinking agents), and the metal oxides and/or sulfur crosslinking agents may be used alone or in combination with a crosslinking accelerator.

A proportion of the crosslinking agent can be selected from the range of, for example, about 1 part by mass to 20 parts by mass with respect to 100 parts by mass of the rubber component (A) in terms of solid content depending on the type of the crosslinking agent and the rubber component (A). For example, a proportion of the metal oxide as the crosslinking agent is, for example, 1 part by mass to 20 parts by mass, preferably 3 parts by mass to 17 parts by mass, more preferably 5 parts by mass to 15 parts by mass, and still more preferably 7 parts by mass to 13 parts by mass, with respect to 100 parts by mass of the rubber component (A). When the metal oxide as the crosslinking agent and the sulfur crosslinking agent are combined, a proportion of the sulfur crosslinking agent is, for example, about 0.1 parts by mass to 50 parts by mass, preferably about 1 part by mass to 30 parts by mass, and more preferably about 3 parts by mass to 10 parts by mass with respect to 100 parts by mass of the metal oxide. A proportion of the organic peroxides is, for example, 1 part by mass to 8 parts by mass, preferably 1.5 parts by mass to 5 parts by mass, and more preferably 2 parts by mass to 4.5 parts by mass

with respect to 100 parts by mass of the rubber component (A).

Examples of the co-crosslinking agent (crosslinking aid or co-vulcanization agent coagent) include known crosslinking aids, for example, a polyfunctional (iso)cyanurate [for example, triallyl isocyanurate (TAIC), triallyl cyanurate (TAC)], a polydiene (for example, 1,2-polybutadiene), a metal salt of an unsaturated carboxylic acid [for example, a polyvalent metal salt of a (meth)acrylic acid such as zinc (meth)acrylate and magnesium (meth)acrylate], oximes (for example, quinone dioxime), guanidines (for example, diphenyl guanidine), a polyfunctional (meth)acrylate [for example, an alkanediol di(meth)acrylate such as ethylene glycol di(meth)acrylate and butanediol di(meth)acrylate, and an alkane polyol poly(meth)acrylate such as trimethylolpropane tri(meth)acrylate and pentaerythritol tetra(meth)acrylate], and bismaleimides (an aliphatic bismaleimide, for example, an alkylene bismaleimide such as N,N'-1,2-ethylene dimaleimide, N,N'-hexamethylene bismaleimide, and 1,6'-bismaleimido-(2,2,4-trimethyl)cyclohexane; an arene bismaleimide or aromatic bismaleimide, such as N,N'-m-phenylene dimaleimide, 4-methyl-1,3-phenylene dimaleimide, 4,4'-diphenylmethane dimaleimide, 2,2-bis[4-(4-maleimidophenoxy)phenyl]propane, 4,4'-diphenyl ether dimaleimide, 4,4'-diphenylsulfone dimaleimide, and 1,3-bis(3-maleimidophenoxy)benzene). These crosslinking aids may be used alone or in combination of two or more kinds thereof. Among these crosslinking aids, a polyfunctional (iso)cyanurate, a polyfunctional (meth)acrylate, and bismaleimides (arene bismaleimide or aromatic bismaleimide such as N,N'-m-phenylene dimaleimide) are preferred, and bismaleimides are often used. The addition of the crosslinking aid (for example, bismaleimides) can increase a degree of crosslinking and prevent adhesion wear and the like.

A proportion of the co-crosslinking agent (crosslinking aid) such as bismaleimides is, in terms of solid content, for example, 0.1 part by mass to 10 parts by mass, preferably 0.5 part by mass to 8 parts by mass, more preferably 1 part by mass to 5 parts by mass, and still more preferably 2 parts by mass to 4 parts by mass with respect to 100 parts by mass of the rubber component (A).

When the compression rubber layer includes a two-layer structure, a proportion of the co-crosslinking agent in the first compression rubber layer is, for example, 0.5 parts by mass to 10 parts by mass, preferably 1 part by mass to 8 parts by mass, more preferably 1.5 to 5 parts by mass, and still more preferably 2 to 4 parts by mass, with respect to 100 parts by mass of the rubber component (first rubber component). A proportion of the co-crosslinking agent in the second compression rubber layer is, for example, 10 parts by mass or less, preferably 5 parts by mass or less, and more preferably 1 part by mass or less, with respect to 100 parts by mass of the rubber component (second rubber component). When the compression rubber layer includes a single-layer structure, a proportion of the co-crosslinking agent in the tension rubber layer may be the same as a proportion of the co-crosslinking agent in the compression rubber layer. When the compression rubber layer includes a two-layer structure, a proportion of the co-crosslinking agent in the tension rubber layer may be the same as a proportion of the co-crosslinking agent in the first compression rubber layer.

Examples of the crosslinking accelerator (vulcanization accelerator) include thiuram accelerators [for example, tetramethylthiuram monosulfide (TMTM), tetramethylthiuram disulfide (TMTD), tetraethylthiuram disulfide (TETD), tetrabutylthiuram disulfide (TBTD), dipentamethylenethiuram tetrasulfide (DPTT), and N,N'-dimethyl-N,N'-diphenylthiuram disulfide], thiazole accelerators [for example, 2-mercaptobenzothiazole, a zinc salt of 2-mercaptobenzothiazole, 2-mercaptothiazoline, dibenzothiazyl disulfide, and 2-(4'-morpholinodithio)benzothiazole], sulfenamide accelerators [for example, N-cyclohexyl-2-benzothiazyl sulfenamide (CBS), and N,N'-dicyclohexyl-2-benzothiazyl sulfenamide], guanidines (diphenyl guanidine, di-o-tolyl guanidine, or the like), urea or thiourea accelerators (for example, ethylene thiourea), dithiocarbamates, and xanthates. These crosslinking accelerators may be used alone or in combination of two or more kinds thereof. Among these crosslinking accelerators, TMTD, DPTT, CBS, and the like are widely used.

A proportion of the crosslinking accelerator may be, in terms of solid content, 15 parts by mass or less (for example, 0 parts by mass to 15 parts by mass), for example, 0.1 parts by mass to 10 parts by mass, preferably 0.2 parts by mass to 5 parts by mass, more preferably 0.3 parts by mass to 3 parts by mass, and still more preferably 0.5 parts by mass to 1.5 parts by mass, with respect to 100 parts by mass of the rubber component (A). When the compression rubber layer includes a single-layer structure, a proportion of the crosslinking accelerator in the tension rubber layer may be the same as a proportion of the crosslinking accelerator in the compression rubber layer. When the compression rubber layer includes a two-layer structure, a proportion of the crosslinking accelerator in the tension rubber layer may be the same as a proportion of the crosslinking accelerator in the first compression rubber layer.

A proportion of the softener (oils such as naphthene oil) may be, in terms of solid content, 30 parts by mass or less (for example, 0 parts by mass to 30 parts by mass), and is, for example, 1 part by mass to 30 parts by mass, preferably 3 parts by mass to 20 parts by mass, and more preferably 3 parts by mass to 10 parts by mass, with respect to 100 parts by mass of the rubber component (A).

When the compression rubber layer includes a two-layer structure, a proportion of the softener in the first compression rubber layer is, for example, 1 part by mass to 30 parts by mass, preferably 3 parts by mass to 20 parts by mass, and more preferably 3 parts by mass to 10 parts by mass, with respect to 100 parts by mass of the rubber component (first rubber component). A proportion of the softener in the second compression rubber layer is, for example, 20 parts by mass or less, preferably 10 parts by mass or less, and more preferably 5 parts by mass or less, with respect to 100 parts by mass of the rubber component (second rubber component). When the compression rubber layer includes a single-layer structure, a proportion of the softener in the tension rubber layer may be the same as a proportion of the softener in the compression rubber layer. When the compression rubber layer includes a two-layer structure, a proportion of the softener in the tension rubber layer may be the same as a proportion of the softener in the first compression rubber layer.

A proportion of the processing agent or the processing aid (such as stearic acid) may be 10 parts by mass or less (for example, 0 parts by mass to 10 parts by mass), for example, 0.1 parts by mass to 5 parts by mass, preferably 0.5 parts by mass to 3 parts by mass, and more preferably 1 part by mass to 3 parts by mass in terms of solid content with respect to 100 parts by mass of the rubber component (A).

A proportion of the anti-aging agent is, for example, 0.5 part by mass to 15 parts by mass, preferably 1 part by mass to 10 parts by mass, more preferably 2.5 parts by mass to 7.5 parts by mass, and still more preferably 3 parts by mass to 7 parts by mass in terms of solid content with respect to 100 parts by mass of the rubber component (A).

A proportion of the plasticizer may be, in terms of solid content, 30 parts by mass or less (for example, 0 parts by mass to 30 parts by mass), and is, for example, 0.5 parts by mass to 20 parts by mass, preferably 1 parts by mass to 10 parts by mass, and more preferably 3 parts by mass to 7 parts by mass, with respect to 100 parts by mass of the rubber component (A).

When the compression rubber layer includes a two-layer structure, the proportion of the plasticizer in the first compression rubber layer is, for example, 20 parts by mass or less, preferably 10 parts by mass or less, and more preferably 5 parts by mass or less, with respect to 100 parts by mass of the rubber component (first rubber component). A proportion of the plasticizer in the second compression rubber layer is, for example, 1 part by mass to 30 parts by mass, preferably 3 parts by mass to 20 parts by mass, and more preferably 3 parts by mass to 10 parts by mass, with respect to 100 parts by mass of the rubber component (second rubber component). When the compression rubber layer includes a single-layer structure, a proportion of the plasticizer in the tension rubber layer may be the same as a proportion of the plasticizer in the compression rubber layer. When the compression rubber layer includes a two-layer structure, a proportion of the plasticizer in the tension rubber layer may be the same as a proportion of the plasticizer in the first compression rubber layer.

[Tension Member Layer]

The tension member layer may include a tension member, and may be a tension member layer formed of only a tension member as described above, but it is preferable that the tension member layer be a tension member layer (adhesion rubber layer) formed of a crosslinked rubber composition in which the tension member is embedded from a viewpoint of preventing peeling between layers and improving the durability of the belt as shown in FIGS. 1 to 4. The tension member layer formed of the crosslinked rubber composition in which the tension member is embedded is generally referred to as an adhesion rubber layer, and the tension member may be embedded in a layer formed of a crosslinked rubber composition containing a rubber component. It is preferable that the adhesion rubber layer be interposed between the compression rubber layer and the tension rubber layer to adhere the compression rubber layer and the tension rubber layer, and the tension member be embedded in the adhesion rubber layer.

An average thickness of the tension member layer (particularly, adhesion rubber layer) is, for example, 0.2 mm to 5 mm, preferably 0.3 mm to 4 mm, more preferably 0.5 mm to 3.5 mm, still more preferably 0.8 mm to 3 mm, and most preferably 1 mm to 2.5 mm.

(Crosslinked Rubber Composition of Tension Member Layer)

The rubber hardness Hs of the crosslinked rubber composition constituting the tension member layer (particularly, an adhesion rubber layer) is, for example, 72° to 80°, preferably 73° to 78°, and more preferably 75° to 77°. If the rubber hardness is too small, the side pressure resistance may decrease. On the other hand, if the rubber hardness is too large, there is a concern that the crosslinked rubber composition around the tension member becomes rigid and the tension member is hardly bent, and heat generation deterioration (crack) of the tension member layer, bending fatigue of the tension member, and the like occur, and the tension member is peeled off.

As the rubber component (A1) constituting the crosslinked rubber composition forming the tension member layer, the rubber component exemplified as the rubber component (A) of the compression rubber layer and the tension rubber layer can be used, and a preferred aspect can also be selected from the preferred aspects of the rubber component (A).

The crosslinked rubber composition of the tension member layer may further contain a filler (A2) in addition to the rubber component (A1). As the filler (A2), a filler exemplified as the filler (C) in the compression rubber layer and the tension rubber layer can be used. Among the fillers, carbon black and reinforcing silica are preferred, and a combination of carbon black and reinforcing silica is particularly preferred.

A proportion of the filler (A2) in the tension member layer is, for example, 1 part by mass to 100 parts by mass, preferably 10 parts by mass to 80 parts by mass, more preferably 30 parts by mass to 70 parts by mass, and still more preferably 40 parts by mass to 60 parts by mass, with respect to 100 parts by mass of the rubber component (A1). When the carbon black and the reinforcing silica are combined, a proportion of the reinforcing silica is, for example, 10 parts by mass to 200 parts by mass, preferably 30 parts by mass to 100 parts by mass, and more preferably 50 parts by mass to 80 parts by mass, with respect to 100 parts by mass of the carbon black.

The crosslinked rubber composition of the tension member layer may further contain another additive (A3) in addition to the rubber component (A1). As the additive (A3), additives exemplified as the additives (D) in the compression rubber layer and the tension rubber layer can be used, and a crosslinking agent, a crosslinking accelerator, a processing agent, a processing aid, a plasticizer, an anti-aging agent, and the like can be preferably used. A proportion of the additive (A3) can be selected from the same range as a proportion of the additive (D) in the compression rubber layer and the tension rubber layer, including the preferred range.

The rubber hardness Hs of the tension member layer can be selected from a range of, for example, about 60° to 90°, preferably from 72° to 80°, more preferably from 73° to 78°, still more preferably from 74° to 78°, and most preferably from 75° to 77°. A tensile strength of the tension member layer is, for example, 12 MPa to 20 MPa, preferably 13 MPa to 18 MPa, and more preferably 14 MPa to 17 MPa in the belt width direction.

(A4) Tension Member

A tension member (A4) included in the tension member layer is not particularly limited, and is usually a cord (twisted cord) arranged at a predetermined interval in the belt width direction. The cords may be arranged to extend in the belt longitudinal direction, and may be arranged to extend in parallel at a predetermined pitch in the belt longitudinal direction, and from the viewpoint of productivity, the cords are generally arranged in a spiral shape to extend substantially parallel to the belt longitudinal direction at a predetermined pitch. When the cords are arranged in a spiral shape, an angle of the cord with respect to the belt longitudinal direction may be, for example, 5° or less, and it is more preferable that the angle be closer to 0° from a viewpoint of belt running performance. A pitch or an interval (in particular, a spinning pitch of the cords), which is a distance between centers of adjacent tension members, is preferably set in a range of 1.0 mm to 3.6 mm, more preferably set in a range of 1.2 mm to 3 mm, and still more preferably set in a range of 1.4 mm to 2.4 mm.

When the tension member (A4) is embedded in an adhesion rubber constituting the tension member layer, a part thereof may be embedded in the adhesion rubber. From the viewpoint of improving durability, an aspect in which the tension member is not exposed on a surface of the tension member layer (an aspect in which the entire tension member is completely embedded in the adhesion rubber) is preferable. The tension member (A4) is preferably a cord.

Examples of the fibers constituting the cord include fibers exemplified as fibers constituting the short fiber (B) in the compression rubber layer and the tension rubber layer. These fibers may be used alone or in combination of two or more kinds thereof. Among these fibers, from the viewpoint of high modulus, synthetic fibers such as polyester fibers (polyalkylene arylate fibers) having $C_{2-4}$ alkylene-$C_{8-14}$ arylate such as ethylene terephthalate and ethylene-2, 6-naphthalate as main constituent units, and polyamide fibers (aramid fibers and the like), and inorganic fibers such as carbon fibers are widely used, and polyester fibers (particularly, polyethylene terephthalate fibers and polyethylene naphthalate fibers) and polyamide fibers (particularly, aramid fibers) are preferred.

The fibers constituting the cord may be multi-filament yarns. Fineness of the multi-filament yarns may be, for example, 2,000 denier to 10,000 denier (particularly 4,000 denier to 8,000 denier). The multi-filament yarns may contain, for example, about 100 filaments to 5000 filaments, preferably 500 filaments to 4000 filaments, and more preferably 1000 filaments to 3000 filaments.

As the cord, generally, a twisted cord including a multi-filament yarn (for example, a piled cord, a single twisted cord or Lang twisted cord) can be used. An average wire diameter of the cord (fiber diameter of twisted cord) may be, for example, 0.5 mm to 3 mm, preferably 0.6 mm to 2.5 mm, more preferably 0.7 mm to 2 mm, and furthermore preferably 1.1 mm to 2 mm.

When the cord is embedded in the adhesion rubber layer, the cord may be subjected to surface treatment in order to improve adhesiveness to the crosslinked rubber composition forming the adhesion rubber layer. Examples of the surface treatment agent include surface treatment agents exemplified as surface treatment agents of the short fiber (B) in the compression rubber layer and the tension rubber layer. The surface treatment agents may be used alone or in combination of two or more kinds thereof, or the surface treatment may be performed a plurality of times sequentially with the same or different surface treatment agents. The cord is preferably subjected to the adhesion treatment with at least the RFL liquid.

[Cover Fabric]

The cover fabric is formed of a common fabric. Examples of the fabric include a woven fabric, a knitted fabric (weft knitted fabric, warp knitted fabric), and a fabric material such as a nonwoven fabric, and among these fabrics, a woven fabric such as a plain weave, a twill weave, a satin weave, or the like, a loom fabric having an intersection angle of more than 90° and 120° or less, a knitted fabric, or the like is preferable. A woven fabric generally used as a cover fabric of a power-transmission belt for general industrial or agricultural machines [plain weave fabric having a right angle of intersection, and plain weave fabric having an intersection angle of more than 90° and 120° or less (wide angle canvas)] is particularly preferable. Further, in an application where durability is required, the fabric may be a wide angle canvas.

Examples of the fibers constituting the fabric include the fibers exemplified as the fibers constituting the short fiber (B) in the compression rubber layer and the tension rubber layer. These fibers may be single yarns in which one type of fiber is used alone, or may be composite yarns (blended yarns or the like) in which two or more kinds of fibers are combined.

Among these fibers, a blended yarn of polyester fibers and cellulose fibers is preferable in terms of excellent mechanical properties and economy.

The polyester fiber may be a polyalkylene arylate fiber. Examples of the polyalkylene arylate fiber include poly $C_{2-4}$ alkylene -$C_{8-14}$ arylate fibers such as polyethylene terephthalate (PET) fibers and polyethylene naphthalate (PEN) fibers. These polyester fibers may be used alone or in combination of two or more kinds thereof.

Examples of the cellulose fibers include cellulose fibers derived from plants, animals, bacteria, or the like and fibers of a cellulose derivative. Examples of the cellulose fibers include natural plant-derived cellulose fibers (pulp fibers) such as wood pulp (softwood, hardwood pulp, and the like), bamboo fibers, sugar cane fibers, seed hair fibers (cotton fibers (cotton linter), kapok, and the like), gin skin fibers (hemp, paper mulberry, oriental paperbush, and the like), and leaf fibers (Manila hemp, New Zealand flax, and the like); animal derived cellulose fibers such as Hoya cellulose; bacterial cellulose fibers; and cellulose of algae. Examples of the cellulose derivative fibers include cellulose ester fibers and regenerated cellulose fibers (rayon, cupro, lyocell, and the like). These cellulose fibers may be used alone or in combination of two or more kinds thereof. Among these, cotton fibers are preferable.

A mass ratio of the polyester fibers to the cellulose fibers is, for example, the former/the latter = 90/10 to 10/90, preferably 80/20 to 20/80, and more preferably 70/30 to 30/70 (particularly 60/40 to 40/60).

An average fineness of the yarn constituting the fabric is, for example, 5 counts to 30 counts, preferably 10 counts to 25 counts, and more preferably 15 counts to 23 counts.

The fabric (raw fabric) has a fabric weight of, for example, 100 g/m$^2$ to 500 g/m$^2$, preferably 200 g/m$^2$ to 400 g/m$^2$, and more preferably 250 g/m$^2$ to 350 g/m$^2$.

An average thickness of the fabric (raw fabric) is, for example, 0.1 mm to 1.5 mm, preferably 0.2 mm to 1 mm, and more preferably 0.3 mm to 0.7 mm.

When the fabric (raw fabric) is a woven fabric, a yarn density (density of the warp and the weft) of the fabric is, for example, 60 yarns/50 mm to 100 yarns/50 mm, preferably 70 yarns/50 mm to 90 yarns/50 mm, and more preferably 72 yarns/50 mm to 80 yarns/50 mm.

The cover fabric may be of a single layer or a multilayer (for example, about two to five layers, preferably about two to four layers). From the viewpoint of productivity and the like, a single layer (one ply) or two layers (two plies) are preferable.

The cover fabric may be a fabric to which a rubber component is adhered in order to improve adhesiveness to the belt body. The cover fabric to which the rubber component is adhered may be, for example, a fabric subjected to an adhesion treatment such as a treatment of soaking (immersing) a rubber glue obtained by dissolving a rubber composition in a solvent or a treatment of frictioning (rubbing) a solid rubber composition. In the adhesion treatment, at least one surface of the fabric may be treated, and at least a surface in contact with the belt body is preferably treated.

As the rubber component constituting the rubber composition to be adhered to the cover fabric, the rubber component exemplified as the rubber component (A) of the compression rubber layer and the tension rubber layer can be used, and a preferred aspect also be selected from the same aspects as the rubber component (A) of the compression rubber layer and the tension rubber layer.

The rubber composition to be adhered to the cover fabric may further contain a filler in addition to the rubber component. As the filler, the filler exemplified as the filler (C) in the compression rubber layer and the tension rubber layer can be used, and a preferred aspect and the proportion of the carbon black in the filler can also be selected from the same aspects as the proportion of the filler (C) in the compression rubber layer and the tension rubber layer.

A proportion of the filler (particularly, carbon black) in the rubber composition to be adhered to the cover fabric is, for example, 5 parts by mass to 80 parts by mass, preferably 10 parts by mass to 75 parts by mass, and more preferably 30 parts by mass to 70 parts by mass (particularly 40 parts by mass to 60 parts by mass), with respect to 100 parts by mass of the rubber component.

The rubber composition to be adhered to the cover fabric may further contain a plasticizer in addition to the rubber component. As the plasticizer, the plasticizer exemplified as the plasticizer in the compression rubber layer and the tension rubber layer can be used, and a preferred aspect can also be selected from the same aspects as the plasticizer in the compression rubber layer and the tension rubber layer.

A proportion of the plasticizer in the rubber composition to be adhered to the cover fabric is, for example, 3 parts by mass to 50 parts by mass, preferably 5 parts by mass to 40 parts by mass, and more preferably 10 parts by mass to 30 parts by mass (particularly 15 parts by mass to 25 parts by mass), with respect to 100 parts by mass of the rubber component.

The rubber composition to be adhered to the cover fabric may further contain a short fiber and other additives in addition to the rubber component. As the short fiber, the short fiber (B) exemplified in the sections of the compression rubber layer and the tension rubber layer can be used. As the other additive, the additives exemplified as the additive (D) in the compression rubber layer and the tension rubber layer can be used. Among these, the rubber composition to be adhered to the cover fabric preferably contains a crosslinking agent or a vulcanization agent, a crosslinking accelerator, a processing agent or a processing aid, and an anti-aging agent in addition to the rubber component. A proportion of each of the additives to the rubber component can be selected from the same aspects as those of the compression rubber layer and the tension rubber layer.

The rubber hardness Hs of the crosslinked rubber composition to be adhered to the cover fabric is, for example, 40° to 70°, preferably 45° to 65°, and more preferably 50° to 60°. A tensile strength of the crosslinked rubber composition to be adhered to the cover fabric is, for example, 5 MPa to 20 MPa, preferably 10 MPa to 15 MPa, and more preferably 12 MPa to 13 MPa in the belt width direction.

An average thickness of the cover fabric (in the case of multiple layers, an average thickness of each layer) is, for example, 0.4 mm to 2 mm, preferably 0.5 mm to 1.4 mm. If a thickness of the cover fabric is too small, wear resistance may decrease. On the other hand, if the thickness of the cover fabric is too large, the flexibility of the belt may decrease.

(Reinforcing Fabric Layer)

Each wrapped V-belt portion may further include a reinforcing fabric layer between the inner peripheral surface (surface at an inner peripheral side) of the compression rubber layer and the cover fabric. FIG. 7 shows an example of a wrapped V-belt portion including a reinforcing fabric layer. In this example, similarly to the wrapped V-belt portion in FIG. 6, a wrapped V-belt portion 51 includes a tension rubber layer 53, a tension member layer (adhesion rubber layer) 54 in which a tension member (cord) 54a is embedded, a first compression rubber layer 55a, a second compression rubber layer 55b, and a cover fabric 56. In this example, unlike the wrapped V-belt portion in FIG. 6, a reinforcing fabric layer 57 is interposed between the second compression rubber layer 55b and the cover fabric 56.

The reinforcing fabric layer is also formed of a common fabric as in the case of the cover fabric. The fabric may be selected from a fabric exemplified in the section of the cover fabric, and a preferred aspect can also be selected from the preferable aspects of the cover fabric.

The reinforcing fabric layer may be a fabric to which a rubber component is adhered in order to improve the adhesiveness between the compression rubber layer and the cover fabric. The fabric to which the rubber component is adhered may be, for example, a fabric subjected to an adhesion treatment such as a treatment of soaking (immersing) a rubber glue obtained by dissolving a rubber composition in a solvent or a treatment of frictioning (rubbing) a solid rubber composition. As the rubber composition, the rubber composition exemplified as the rubber composition to be adhered to the cover fabric can be used, and a preferred aspect is also the same as that of the cover fabric. In the adhesion treatment, at least one surface of the fabric may be treated, and at least a surface in contact with the compression rubber layer is preferably treated, and both surfaces are particularly preferably treated.

An average thickness of the reinforcing fabric layer is, for example, 0.4 mm to 2 mm, and preferably 0.5 mm to 1.4 mm. If the thickness of the reinforcing fabric layer is too small, an effect of improving the wear resistance may decrease. On the other hand, if the thickness of the reinforcing fabric layer is too large, the flexibility of the belt may decrease.

<Tie Band (Bonding Member)>

The tie band for connecting the outer peripheral surfaces of the plurality of wrapped V-belt portions includes a short fiber-containing rubber layer (crosslinked rubber composition) in which a short fiber is arranged (oriented) in the belt width direction. A plurality of rib portions extending in the belt longitudinal direction at intervals in the belt width direction are formed on the belt outer peripheral side of the short fiber-containing rubber layer. The tie band including the short fiber-containing rubber layer may further include a fabric layer on a belt inner peripheral side of the short fiber-containing rubber layer as necessary.

[Shape of Rib Portion]

A cross-sectional shape of each rib portion formed in parallel in the belt width direction is not particularly limited as long as the rib portion includes a V-shaped groove that can be fitted to a V-grooved pulley (V-ribbed pulley). As shown in FIG. 3 (Embodiment 3), the cross-sectional shapes of all the rib portions may be the same, or as shown in FIG. 1 (Embodiment 1), the cross-sectional shapes of the rib portions at both ends may be different from the cross-sectional shapes of the other rib portions. The rib portion may include a rib portion (trapezoidal rib portion) whose cross-sectional shape is an inverted V-shape (trapezoid) in the belt width direction, and may further include a substantially trapezoidal rib portion in addition to the trapezoidal rib portion. The substantially trapezoidal rib portions may be rib portions located at both ends of the plurality of rib portions arranged in the belt width direction. A shape of the substantially trapezoidal rib portion may be a quadrangular shape in which one oblique side of the trapezoid is a side perpendicular to the bottom side (in FIG. 1, a quadrangular shape or a right trapezoid shape which is a cross-sectional shape of the rib portions located at both ends among ribs arranged in the belt width direction). The shape of the substantially trapezoidal rib portion may be a pentagonal shape or a hexagonal shape in which at least one oblique side of the trapezoid is a side perpendicular to a lower base from the middle of the trapezoid from an upper base to the lower base. That is, since the joined V-belt is manufactured by cutting in accordance with a width of the wrapped V-belt portion, the shapes of the plurality of rib portions may be a shape in which a portion between adjacent rib portions is cut or may be a shape in which the rib portions are cut (shape in which the cross-section is the right trapezoid shape or the pentagonal shape). A V-rib angle ($\alpha 2$ in FIG. 5)(angle of an inverted-V-shaped side face) of the oblique side of the trapezoid, which is a cross-sectional shape of the rib portion, is, for example, 20° to 100°, preferably 25° to 60°, more preferably 30° to 50°, more preferably 35° to 45°, and most preferably 38° to 42° (particularly 40°) in the belt thickness direction. The V-rib angle ($\alpha 2$) may be adjusted so that the ratio (P1/P2) of P1 and P2 shown in FIG. 5 and the ratio (H2/H1) of H2 and H1 shown in FIG. 5 are within the above range.

The connecting portion between the wrapped V-belt portions (portion which is a region which is not in contact with the outer peripheral surface of the wrapped V-belt portion in the tie band and connects adjacent wrapped V-belt portions in the belt width direction) may be formed of a rib peak (maximum thickness portion of the tie band) as shown in FIG. 3, or may be formed of a rib valley (minimum thickness portion of the tie band) as shown in FIG. 1. That is, as shown in FIG. 3, a center of a top portion of the rib portions may be located at a gap (connecting portion) between adjacent wrapped V-belt portions, and as shown in FIG. 1, a bottom portion of the V-shaped groove may be located at a gap (connecting portion) between adjacent wrapped V-belt portions. Among these, as shown in FIG. 3, it is preferable that the connecting portion be formed of a rib peak, from the viewpoint of preventing the cutting.

[Short Fiber-containing Rubber Layer]

The short fiber-containing rubber layer contains a short fiber arranged (oriented) in the belt width direction. Specifically, the short fiber of the short fiber-containing rubber layer may be arranged substantially parallel to the belt width direction.

In the present application, the fact that the short fiber is arranged in the belt width direction means that an angle formed by a direction in which the short fiber is arranged and the belt width direction is about 20° or less (for example, 0° to 10°), preferably 10° or less (for example, 0° to 5°, particularly substantially 0°) as viewed from the belt longitudinal direction.

In the present application, the short fiber-containing rubber layer may include a short fiber that is not arranged in the belt width direction as long as the wear resistance of the frictional power-transmission flank (frictional power-transmission flank of the rib portion) in the short fiber-containing rubber layer, the rigidity (side pressure resistance) in the belt width direction, and the flexibility (softness and winding property to the pulley) in the belt longitudinal direction can be ensured in a balanced manner. That is, the short fiber included in the short fiber-containing rubber layer may not necessarily be oriented linearly in the belt width direction. For example, the angle formed by the direction in which the short fiber is arranged and the belt width direction may be an angle (for example, about 30°) that partially exceeds 20° (for example, in a layer at the center in the belt thickness direction) as viewed from the belt longitudinal direction. The angle may be an angle (for example, about 30°) that exceeds 20° as a whole or partially as viewed from the belt thickness direction. To be more specific, in a tensile physical property test (JIS K6251 (2017)) of a crosslinked rubber sheet, a crosslinked rubber composition as the short fiber-containing rubber layer may be formed such that an elongation at break (%) in a direction perpendicular to the short fiber grain direction is significantly (for example, about 10 times) larger than an elongation at break (%) in the short fiber grain direction. Specifically, among the short fibers included in the short fiber-containing rubber layer, a proportion of the short fibers arranged in the belt width direction may be, for example, 80% or more, preferably 90% or more, and more preferably 95% or more.

The short fiber-containing rubber layer functionally corresponds to a compression rubber layer in that the rib portion (two inclined surfaces on both sides of the rib portion) forms a frictional power-transmission flank during back face driving. However, in a preferred aspect of the joined V-belt, the arrangement pitch (P2) of the rib portions is smaller than the arrangement pitch (P1) of the V-belt portions along the belt width direction, and a volume (cross-sectional area) of the rib portions is inevitably smaller than a volume (cross-sectional area) of the V-belt portions. Therefore, it can be said that the rib portions can disperse an axial load (side pressure) more easily than the V-belt portions, and the rigidity against the buckling deformation is easily secured. Therefore, the short fiber-containing rubber layer may be a single layer (one layer) as in the case of the compression rubber layer constituting each V-belt portion, or may be a rubber layer having a laminated structure including two types of rubber layers having different rubber hardness and having a rubber hardness of each layer adjusted. The short fiber-containing rubber layer is preferably a single layer (one layer) in consideration of the above-described functions, characteristics, productivity, and the like.

As described above, the rib portions can disperse the axial load (side pressure) more easily than the V-belt portions, and the rigidity against the buckling deformation is easily secured. Therefore, a rubber hardness of the short fiber-containing rubber layer may be approximately an intermediate level of a rubber hardness of each layer of the compression rubber layer (first compression rubber layer and second compression rubber layer) formed of two layers.

The rubber hardness Hs of the short fiber-containing rubber layer can be selected from a range of, for example, about 70° to 95°, preferably 78° to 91°, more preferably 80° to 90°, still more preferably 82° to 89°, and most preferably 83° to 88°. If the rubber hardness is too small, the side pressure resistance and the wear resistance may decrease. On the other hand, if the rubber hardness is too large, the flexibility may decrease.

A tensile strength of the short fiber-containing rubber layer is, for example, 12 MPa to 35 MPa, preferably 13 MPa to 30 MPa, more preferably 14 MPa to 26 MPa, and still more preferably 15 MPa to 20 MPa in the belt width direction. If the tensile strength is too small, the side pressure resistance may decrease. On the other hand, if the tensile strength is too large, the flexibility may decrease.

An average thickness of the short fiber-containing rubber layer is distinguished between the case where the tie band is formed of only a short fiber-containing rubber layer and the case where the tie band is further formed of a fabric layer including a fibrous structure.

As shown in FIG. 1, when the tie band is formed of only a short fiber-containing rubber layer (Embodiment 1), the average thickness of the short fiber-containing rubber layer is equal to the thickness (H3) of the tie band (T), and is, for example, 4.5 mm to 6.5 mm, preferably 4.6 mm to 6 mm. In this case, in consideration of ensuring the rigidity in the belt width direction and preventing the cutting (in particular, preventing the cutting at the connecting portion), a thickness (d) of the base portion (minimum thickness portion) needs to be reduced to about 2 mm (for example, 1.8 mm to 2.3 mm).

As shown in FIG. 2, when the tie band is formed of a fabric layer containing a short fiber-containing rubber layer and a fibrous structure laminated on a belt inner peripheral side of the tie band (Embodiment 2), the average thickness of the short fiber-containing rubber layer is, for example, 3 mm to 5.3 mm, preferably 3 mm to 5 mm.

However, in order to ensure the rigidity in the belt width direction and prevent cutting at the connecting portion without unnecessarily increasing a thickness of the short fiber-containing rubber layer (particularly, a thickness d of the base portion) in the tie band (Embodiment 1) formed only of the short fiber-containing rubber layer (while forming the short fiber-containing rubber layer to be thin to the same level as a thickness of the short fiber-containing rubber layer in Embodiment 2), it is preferable to form the connecting portion with the maximum thickness portion (rib peak) of the tie band as shown in FIG. 3 (Embodiment 3).

A rubber hardness and the like of the short fiber-containing rubber layer can be adjusted by appropriately adjusting the composition of the compositions. The method for adjusting the rubber hardness or the like is not particularly limited, and the rubber hardness may be adjusted by changing the composition and/or type of the components constituting the composition. From the viewpoint of convenience and the like, it is preferable to adjust the rubber hardness by changing the proportion and/or type of the short fiber and the filler.

As the rubber component (B1) constituting the crosslinked rubber composition forming the short fiber-containing rubber layer, the rubber component exemplified as the rubber component (A) in the compression rubber layer and the tension rubber layer can be used, and a preferred aspect can also be selected from the preferred aspects of the rubber component (A).

The crosslinked rubber composition of the short fiber-containing rubber layer further contains a short fiber (B2) in addition to the rubber component (B1). Examples of the short fiber (B2) include short fibers exemplified as the short fiber (B) of the compression rubber layer and the tension rubber layer. Among the short fiber, aramid fibers and/or polyester fibers are preferred, and a combination of aramid fibers and polyester fibers is particularly preferred. An average fiber diameter and an average length of the short fiber (B2) can be selected from the average fiber diameter and the average length of the short fiber (B). A proportion of the short fiber (B2) is, for example, 1 part by mass to 50 parts by mass, preferably 5 parts by mass to 30 parts by mass, and more preferably 10 parts by mass to 30 parts by mass, with respect to 100 parts by mass of the rubber component (B1). The short fiber (B2) may be subjected to an adhesion treatment (or surface treatment) by a commonly used method. A method for the adhesion treatment can be selected from methods described in the section of the short fiber (B) of the compression rubber layer and the tension rubber layer.

The crosslinked rubber composition of the short fiber-containing rubber layer may further contain a filler (B3) in addition to the rubber component (B1). Examples of the filler (B3) include the filler exemplified as the filler (C) in the compression rubber layer and the tension rubber layer. Among the fillers, carbon black is preferable. A proportion of the filler (B3) is, for example, 5 parts by mass to 80 parts by mass, preferably 10 parts by mass to 60 parts by mass, more preferably 15 parts by mass to 50 parts by mass, and still more preferably 20 parts by mass to 40 parts by mass, with respect to 100 parts by mass of the rubber component (B1).

The crosslinked rubber composition of the short fiber-containing rubber layer may further contain another additive (B4) in addition to the rubber component (B1). As the additive (B4), additives exemplified as the additives (D) in the compression rubber layer and the tension rubber layer can be used, and a crosslinking agent, a crosslinking accelerator, a processing agent, a processing aid, a plasticizer, an anti-aging agent, and the like can be preferably used. Each proportion of the additive (B4) with respect to 100 parts by mass of the rubber component (B1) can be selected from the same range as the proportion of the additive (D) in the compression rubber layer and the tension rubber layer including the preferred range.

[Fabric Layer]

From the viewpoint of preventing the cutting, as shown in FIG. 2 (Embodiment 2), the tie band may further include a fabric layer including a fibrous structure on the belt inner peripheral side. As the fibrous structure constituting the fabric layer, a commonly used fabric can be used, and examples thereof include a cord fabric, a woven fabric, a net fabric, and a net (network structure or mesh). Among them, a weave or a woven fabric having a woven texture such as a cord fabric or a plain-woven fabric is preferred, and a cord fabric is particularly preferred, from the viewpoint of preventing the cutting and ensuring flexibility (flexibility) in the belt longitudinal direction and achieving excellent balance with productivity.

Among the cord fabrics, a cord fabric including a plurality of threads extending in the belt width direction is preferable from the viewpoint of further improving resistance to tensile force acting in the belt width direction. It is particularly preferable to use a cord fabric including a plurality of first threads (yarn bodies) extending in the belt width direction and a plurality of second threads having a lower yarn density (arrangement density) than the plurality of first threads and extending in a direction intersecting the belt width direction.

In the present application, a thread extending in the belt width direction means a thread extending substantially parallel to the belt width direction. Further, "substantially parallel" means that an angle formed by a direction in which the thread extends and the belt width direction is, for example, about 10° or less (for example, 0° to 5°), preferably 3° or less (for example, 0° to 1°, particularly substantially 0°).

A yarn density (the number of yarns per 5 cm in the belt length direction) of the first threads is, for example, 10 yarns/5 cm to 300 yarns/5 cm, preferably 50 yarns/5 cm to 200 yarns/5 cm, more preferably 80 yarns/5 cm to 180 yarns/5 cm, more preferably 100 yarns/5 cm to 170 yarns/5 cm, and most preferably 120 yarns/5 cm to 150 yarns/5 cm.

A yarn density of the second threads is, for example, 1 yarn/5 cm to 30 yarns/5 cm, preferably 2 yarns/5 cm to 10 yarns/5 cm, more preferably 2 yarns/5 cm to 8 yarns/5 cm, more preferably 3 yarns/5 cm to 7 yarns/5 cm, and most preferably 4 yarns/5 cm to 6 yarns/5 cm.

Examples of the fibers constituting the first thread and the second thread include the fibers exemplified as the fibers constituting the short fiber (B) in the compression rubber layer and the tension rubber layer. Among the short fibers, as the first threads, polyester fibers and polyamide fibers are preferred, and aliphatic polyamide fibers such as polyamide 66 fibers are particularly preferred. As the second threads, cellulose fibers are preferred, and cellulose fibers such as cotton fibers are particularly preferred.

When the first threads are polyester fibers or polyamide fibers, the fineness of the first threads (total fineness in the case of multi-filament yarn or the like) is, for example, 100 dtex to 1,000 dtex, preferably 200 dtex to 800 dtex, and more preferably 300 dtex to 500 dtex.

When the second threads are cellulose fibers such as cotton fibers, a thickness (counts) of the second threads is, for example, about 5 counts to 100 counts, preferably about 7 counts to 50 counts, and more preferably about 10 counts to 30 counts.

In order to improve the adhesiveness to a rubber component (crosslinked rubber composition) or the like, the fibrous structure may be subjected to commonly used adhesion treatment or surface treatment (for example, treatment with a treatment liquid containing an adhesive component). The method for the adhesion treatment can be selected from methods described in the short fiber (B) of the compression rubber layer and the tension rubber layer.

An average thickness of the fibrous structure is, for example, about 0.1 mm to 0.5 mm, preferably about 0.2 mm to 0.3 mm. If the thickness of the fibrous structure is too small, there is a possibility of interlayer peeling or cutting. If the thickness of the fibrous structure is too large, the flexibility of the belt may decrease.

In addition to preventing of the peeling of the fibrous structure, the fabric layer preferably has an aspect in which the fibrous structure is embedded (sandwiched) in a rubber component (fabric layer holding rubber) from the viewpoint of preventing the peeling between layers (between the wrapped V-belt portion and/or the short fiber-containing rubber layer and the fibrous structure) and preventing the cutting (including preventing propagation of defects). In this aspect, the fibrous structure is embedded in the crosslinked rubber composition.

As the rubber component (C1) constituting the crosslinked rubber composition of the fabric layer, the rubber component exemplified as the rubber component (A) in the compression rubber layer and the tension rubber layer can be used, and a preferred aspect can also be selected from the preferred aspects of the rubber component (A).

The crosslinked rubber composition of the fabric layer may further contain a filler (C2) in addition to the rubber component (C1). As the filler (C2), a filler exemplified as the filler (C) in the compression rubber layer and the tension rubber layer can be used. Among the fillers, carbon black is preferable. A proportion of the filler (C3) is, for example, 5 parts by mass to 80 parts by mass, preferably 10 parts by mass to 70 parts by mass, more preferably 20 parts by mass to 60 parts by mass, and still more preferably 30 parts by mass to 50 parts by mass, with respect to 100 parts by mass of the rubber component (C1).

The crosslinked rubber composition of the fabric layer may further contain another additive (C3) in addition to the rubber component (C1). As the additive (C3), additives exemplified as the additives (D) in the compression rubber layer and the tension rubber layer can be used, and a crosslinking agent, a crosslinking accelerator, a processing agent, a processing aid, a plasticizer, an anti-aging agent, and the like can be preferably used. A proportion of the additive (C3) can be selected from the same range as a proportion of the additive (D) in the compression rubber layer and the tension rubber layer, including the preferred range.

The rubber hardness Hs of the crosslinked rubber composition of the fabric layer is, for example, 40° to 80°, preferably 50° to 70°, and more preferably 55° to 65°. A tensile strength of the crosslinked rubber composition of the fabric layer is, for example, 5 MPa to 30 MPa, preferably 10 MPa to 25 MPa, and more preferably 15 MPa to 20 MPa in the belt width direction.

The fabric layer can be used alone (single layer) or in combination of two or more kinds thereof (in a laminated structure). The fabric layer is configured such that the outer peripheral surface (entire surface) of the fabric layer and the inner peripheral surface (entire surface) of the short fiber-containing rubber layer are integrated (adhered) to each other, and the fabric layer and the short fiber-containing rubber layer share the deformation stress applied to the tie band. The fabric layer may have a configuration in which the fabric layer serves as an adhesion rubber (binder) for integrating the short fiber-containing rubber layer and the wrapped V-belt portion. In consideration of productivity and the like, the fabric layer is preferably used alone (single layer).

An average thickness of the fabric layer is, for example, 0.4 mm to 1.4 mm, and preferably 0.5 mm to 1 mm. If the thickness of the fabric layer is too small, there is a possibility of interlayer peeling or cutting. On the other hand, if the thickness of the fabric layer is too large, the flexibility of the belt may decrease.

[Modifications]

A surface of each rib portion (in particular, two inclined surfaces on both side portions of the rib portion, which are frictional power-transmission flanks) may be covered with a fabric (fiber member such as a woven fabric, a knitted fabric, or a nonwoven fabric).

<Method for Producing Joined V-belt>

A method for producing a joined V-belt of the present invention includes: a connecting step of connecting a plurality of wrapped V-belt portion precursors by a tie band precursor; a crosslinking molding step of crosslinking and molding the connected wrapped V-belt portion precursors and tie band precursor by heating and pressurizing to obtain a crosslinked molded body; and a rib portion forming step of forming rib portions on an outer peripheral side of the crosslinked molded body. Further, the method for producing a joined V-belt of the present invention may include, as steps prior to the connecting step, a first precursor forming step of producing a wrapped V-belt portion precursor (un-crosslinked wrapped V-belt portion) and a second precursor forming step of producing a tie band precursor (un-crosslinked tie band).

[First Precursor Forming Step of Producing Wrapped V-belt Portion Precursor]

The wrapped V-belt portion precursor (un-crosslinked wrapped V-belt portion) serving as the first precursor can be produced by, for example, the methods described in JPH06-137381A and JP2015-104778A.

Hereinafter, an aspect in which the compression rubber layer includes a two-layer structure and the reinforcing fabric layer is included as a representative producing method will be described. In the representative producing method, a wrapped V-belt portion precursor (un-crosslinked wrapped V-belt portion) can be obtained through a winding step, a cutting step, a skiving step, and a cover winding step.

In the winding step, a laminate in which a reinforcing fabric layer fabric subjected to an adhesion treatment, an un-crosslinked second compression rubber layer sheet obtained by a rolling treatment, and a first compression rubber layer sheet are laminated in this order is wound around a mantle. An un-crosslinked adhesion rubber layer sheet is wound around an outer periphery of the first compression rubber layer sheet. Thereafter, a tension member is wound around an outer periphery of the adhesion rubber layer sheet, and an un-crosslinked tension rubber layer sheet is wound around an outer periphery of the tension member to form an annular laminate.

In the cutting step, the obtained annular laminate is cut (sliced) on the mantle.

In the skiving step, the cut annular laminate is stretched over a pair of pulleys and cut into a V shape while being rotated.

In the cover winding step, a periphery of the obtained un-crosslinked belt body is covered with a cover fabric precursor.

[Second Precursor Molding Step for Producing Tie band Precursor]

A tie band precursor (un-crosslinked tie band) as the second precursor is produced in the following producing steps.

(Preparation of Short Fiber-containing Rubber Layer Precursor)

A short fiber-containing rubber layer precursor is formed through a sheet rolling step and an adjustment step.

In the sheet rolling step, a rubber composition containing a short fiber is mixed and kneaded using a Banbury mixer or the like, and the obtained mixed and kneaded rubber is rolled by a calender roll or the like. An un-crosslinked rubber sheet in which a short fiber is arranged (oriented) in a rolling direction is produced.

In the adjustment step, the obtained un-crosslinked rubber sheet is adjusted to have a predetermined dimension (length, width) and an orientation direction necessary for the tie band.

In this adjustment step, a sheet of a short fiber-containing rubber layer precursor (short fiber-containing rubber layer in which the rubber component is in an un-crosslinked state) disposed such that an arrangement direction of the short fiber is parallel to a width direction of the rubber sheet can be obtained.

As shown in FIG. 1 (Embodiment 1), in the case of a joined V-belt in which a tie band is formed of only a short fiber-containing rubber layer, a short fiber-containing rubber layer precursor is configured as a tie band precursor.

(Preparation of Tie Band Precursor Containing Fabric Layer)

A fabric layer precursor constituting a tie band (fabric layer in which a rubber component of the fabric layer holding rubber is un-crosslinked) can be formed by laminating un-crosslinked fabric layer holding rubber sheets on both surfaces of a fabric (fibrous structure) which may be subjected to adhesion treatment in advance. A tie band precursor can be formed by superimposing a short fiber-containing rubber layer precursor sheet on the fabric layer precursor sheet (superimposing the short fiber-containing rubber layer precursor sheet such that an extending direction of the first threads forming the fibrous structure and the arrangement direction of the short fiber are predetermined directions with respect to a width direction of the sheet).

[Connecting Step of Connecting Plurality of Wrapped V-belt Portions by Tie Band]

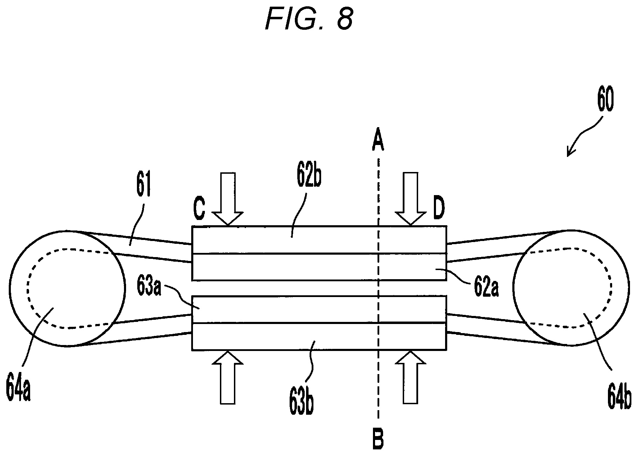

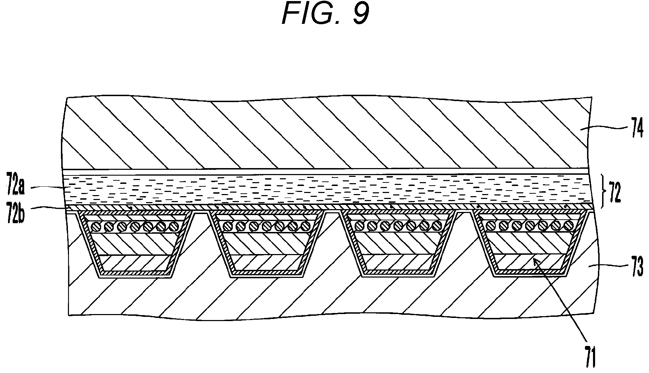

A representative step of connecting the plurality of wrapped V-belt portions with a tie band will be described with reference to FIGS. 8 and 9. As shown in FIG. 8, in a device 60 for crosslinking molding, an un-crosslinked annular body 61 (set of a tie band precursor and a plurality of wrapped V-belt portion precursors) held in a state of being wound around a pair of pulleys 64a and 64b is sandwiched between the pair of pulleys 64a and 64b by two pairs of pressing molds (first pair of pressing molds in which an inner peripheral side mold 62a and an outer peripheral side mold 62b are combined, and second pair of pressing molds in which an inner peripheral side mold 63a and an outer peripheral side mold 63b are combined). Specifically, as shown in FIG. 9, the pair of pressing molds have a structure in which an inner peripheral side mold 73 having a groove portion having an inverted trapezoidal cross-section corresponding to the wrapped V-belt portion and an outer peripheral side mold 74 which is a flat plate having a flat surface facing the inner peripheral side mold 73 are combined. In the pair of pressing molds, after a plurality of wrapped V-belt portion precursors 71 arranged in the width direction are fitted into the groove portion formed in the inner peripheral side mold 73, a tie band precursor 72 is set in a portion on an outer peripheral side thereof. At this time, an arrangement direction of a short fiber of a short fiber-containing rubber layer precursor 72a is set to extend in the belt width direction. As shown in FIG. 9, when a fabric layer precursor 72b is included, the first threads forming the fibrous structure is set to extend in a predetermined direction with respect to the belt width direction.

The tie band precursor 72 and the plurality of wrapped V-belt portion precursors 71 set in this manner are subjected to a crosslinking molding step (vulcanization step) in which the tie band precursor 72 and the plurality of wrapped V-belt portion precursors 71 are sandwiched between the outer peripheral side mold 74 and the inner peripheral side mold 73 and are pressurized and heated.

[Crosslinking Molding Step of Integrating each Component by Crosslinking Reaction of Rubber Component]

In the crosslinking molding step, by pressurizing and heating in the pressing molds, the wrapped V-belt portion precursors and the tie band precursor connected to each other are molded into predetermined shapes, and the respective components are integrated by a crosslinking reaction of the rubber component contained in the respective components. When a portion sandwiched by the pressing molds is crosslinked and molded, the pair of pulleys 64a and 64b are rotated as shown in FIG. 8 to move an un-crosslinked portion of the annular body 61 to the pressing molds, and the crosslinking and molding of the portion is performed. When the annular body 61 is crosslinked over the entire circumference by repeating this operation, a crosslinked sleeve in which the plurality of wrapped V-belt portions are connected by the tie band is formed.

In the crosslinking molding step, a crosslinking temperature can be selected according to the type of the rubber component, and is, for example, 120°C to 200°C, or preferably 150°C to 180°C. The pressure can be selected according to the type of the rubber component, and is, for example, 0.1 MPa to 10 MPa, preferably 0.5 MPa to 3 MPa, and more preferably 0.9 MPa to 1.5 MPa. In the present application, the pressure is a numerical value converted into a press surface pressure.

[Rib Portion Forming Step of Forming Rib Portion (Predetermined Rib Shape) on Belt Outer Peripheral Side]

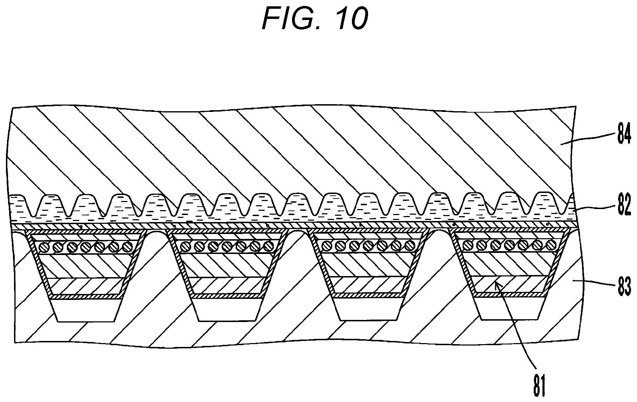

As shown in FIG. 10, a crosslinked sleeve in which a plurality of wrapped V-belt portions 81 are connected and bonded by a tie band 82 is wound around a pair of V-grooved pulleys 83. A predetermined rib shape is formed on an outer peripheral side of the crosslinked sleeve by a grinding process in which the crosslinked sleeve is pressed against an outer peripheral surface of the crosslinked sleeve while rotating a grinding wheel (grinder) 84 provided with protrusions having a V-shaped cross-section corresponding to the plurality of rib portions at a predetermined pitch (interval) in a peripheral length direction in a state where the crosslinked sleeve is caused to run under a constant tension. In this case, whether a connecting portion is formed by a minimum thickness portion (rib valley) of the tie band or the connecting portion is formed by a maximum thickness portion (rib peak) of the tie band can be adjusted by properly using a set of the grinding wheel and the V-grooved pulleys.

By cutting the formed crosslinked sleeve to have a predetermined width, it is possible to obtain a joined V-belt including a predetermined number of wrapped V-belt portions and including a plurality of (predetermined) inverted V-shaped (trapezoidal) rib portions on a back face.

EXAMPLES

Hereinafter, the present invention will be described in more detail based on Examples, but the present invention is not limited to these Examples. Details of materials used in Examples, a method for producing an un-crosslinked rubber sheet, and a method for measuring or evaluating each of physical properties are shown below.

(Raw Materials of Rubber Composition)

Chloroprene rubber: "PM-40" manufactured by DENKA Co., Ltd.
Magnesium oxide: "KyowaMag 30" manufactured by Kyowa Chemical Industry Co., Ltd.
Stearic acid: "Stearic acid TSUBAKI" manufactured by NOF Corporation
Anti-aging agent: "Nonflex OD-3" manufactured by Seiko Chemical Co., Ltd.
Carbon black: "Seast 3" manufactured by Tokai Carbon Co., Ltd.
Silica: "ULTRASIL (registered trademark) VN3" manufactured by Evonik Japan Co., Ltd., BET specific surface area: 175 $m^2/g$
Plasticizer: "Adeka Cizer RS-700" manufactured by ADEKA Corporation
Crosslinking accelerator: "Nocceler TT" manufactured by Ouchi Shinko Chemical Industrial Co., Ltd.
Zinc oxide: "Zinc oxide third grade" manufactured by Seido Chemical Industry Co., Ltd.
Naphthenic oil, "NS-900" manufactured by Idemitsu Kosan Co., Ltd.
N,N'-m-phenylene dimaleimide: "Vulnoc PM" manufactured by Ouchi Shinko Chemical Industrial Co., Ltd.
Aramid short fiber: "Conex short fiber" manufactured by Teijin Co., Ltd. (fiber with an average fiber length of 3 mm, an average fiber diameter of 14 $\mu$m, an adhesion rate of a solid content of 6% by mass subjected to adhesion treatment with an RFL liquid (resorcin: 2.6 parts by mass, 37% formalin: 1.4 parts by mass, vinylpyridine-styrene-butadiene copolymer latex (manufactured by Zeon Corporation, Japan): 17.2 parts by mass, water: 78.8 parts by mass)
Polyester short fiber: "Tetrone" manufactured by Teijin Co., Ltd. (average short fiber length: 3 mm)
Nylon short fiber: "Nylon 66" manufactured by Asahi Kasei Corporation (average short fiber length: 6 mm)
Cotton short fiber (average short fiber length: 6 mm, average fiber diameter: 15 $\mu$m)

[Cord]

Twisted cord of aramid fiber (average wire diameter: 1.190 mm)

[Rubber Composition]

Rubber compositions A to G having compositions shown in Tables 2 and 3 were mixed and kneaded in a Banbury mixer to prepare a massive un-crosslinked rubber composition. The obtained un-crosslinked rubber composition was passed through a calender roll to form a rolled rubber sheet having a predetermined thickness, thereby producing an un-crosslinked rubber sheet for forming each rubber layer. Results of measuring the hardness and tensile strength of a crosslinked product (crosslinked rubber) of each rubber composition are also shown in Tables 2 and 3.

Table 2

| | | Adhesion rubber layer | Friction rubber | Fabric layer holding rubber |
|---|---|---|---|---|
| | | Rubber composition A | Rubber composition B | Rubber composition C |
| Composition (part by mass) | Chloroprene rubber | 100 | 100 | 100 |
| | Magnesium oxide | 4 | 4 | 4 |
| | Stearic acid | 1 | 1 | 2 |
| | Anti-aging agent | 4 | 4 | 4 |
| | Carbon black | 30 | 50 | 40 |
| | Silica | 20 | 0 | 0 |
| | Plasticizer | 5 | 20 | 5 |
| | Crosslinking accelerator | 1 | 1 | 1 |
| | Zinc oxide | 5 | 5 | 5 |
| Crosslinked rubber physical property | Hardness Hs (type A) | 76 | 54 | 60 |
| | Tensile strength (MPa) | 14.5 | 12.3 | 17.0 |

Table 3

| | | Compression rubber layer, tension rubber layer, and short fiber-containing rubber layer | | | |
|---|---|---|---|---|---|
| | | Rubber composition D | Rubber composition E | Rubber composition F | Rubber composition G |
| Composition (part by mass) | Chloroprene rubber | 100 | 100 | 100 | 100 |
| | Aramid short fiber | 20 | 0 | 10 | 2 |
| | Polyester short fiber | 0 | 0 | 10 | 3 |
| | Nylon short fiber | 0 | 0 | 0 | 7 |
| | Cotton short fiber | 0 | 0 | 0 | 12 |
| | Naphthenic oil | 5 | 0 | 5 | 5 |
| | Magnesium oxide | 4 | 4 | 4 | 4 |
| | Carbon black | 50 | 30 | 30 | 30 |
| | Anti-aging agent | 4 | 4 | 4 | 4 |
| | Zinc oxide | 5 | 5 | 5 | 5 |
| | N, N'-m-phenylene dimaleimide | 3 | 0 | 3 | 3 |
| | Stearic acid | 2 | 1 | 2 | 2 |
| | Plasticizer | 0 | 5 | 0 | 0 |
| | Crosslinking accelerator | 0 | 1 | 0 | 0 |
| | Sulfur | 0.5 | 0 | 0.5 | 0.5 |

(continued)

| | | Compression rubber layer, tension rubber layer, and short fiber-containing rubber layer | | | |
| --- | --- | --- | --- | --- | --- |
| | | Rubber composition D | Rubber composition E | Rubber composition F | Rubber composition G |
| Crosslinked rubber physical property | Hardness Hs (type A) | 93 | 76 | 85 | 87 |
| | Tensile strength (MPa) [grain parallel direction] | 30.5 | 15.5 | 16.5 | 17.2 |

[Rubber Hardness Hs of Crosslinked Rubber]

The un-crosslinked rubber sheet for each rubber layer was press-heated at a temperature of 160°C for 30 minutes to produce a crosslinked rubber sheet (thickness: 100 mm × 100 mm × 2 mm). A laminate obtained by laminating three crosslinked rubber sheets was used as a sample, and hardness of the crosslinked rubber sheet was measured using a type A durometer in accordance with a spring type durometer hardness test specified in JIS K6253 (2012).

[Tensile Strength of Crosslinked Rubber]

A crosslinked rubber sheet produced for measuring the rubber hardness Hs of the crosslinked rubber was used as a sample, a test piece punched into a dumbbell shape (No. 5 shape) was produced in accordance with JIS K6251 (2017). In the sample containing the short fibers, a dumbbell-shaped test piece was collected such that an arrangement direction of the short fibers (grain parallel direction) was a tensile direction. A value (tensile strength T) obtained by dividing, by an initial cross-sectional area of the test piece, a maximum tensile force recorded when both ends of the test piece were gripped by a chuck (grip), and the test piece was pulled at a speed of 500 mm/min until the test piece was cut was defined as a tensile strength.

[Cover Fabric]

Using a woven fabric of a blended yarn of polyester fibers and cotton (polyester fiber/cotton = 50/50 mass ratio) (120° wide-angle weaving, fineness: 20 count warps, 20 count wefts, yarn density of warp and weft: 75 yarns/50 mm, fabric weight: 280 g/m$^2$) and a rubber composition B in Table 2, the rubber composition B and the woven fabric were simultaneously passed between rolls having different surface speeds of calender rolls. The rubber composition B was subjected to a friction treatment (performed once on each of front and back surfaces of the woven fabric) by a method in which the rubber composition B was rubbed into the interwoven portions of the woven fabric to prepare a precursor of a cover fabric (rubber-attached woven fabric).

[Fabric Layer]

An un-crosslinked fabric layer holding rubber sheet formed of the rubber composition C shown in Table 2 was laminated on both surfaces of a fabric (fibrous structure) having a structure shown in Table 4, and the fabric was passed through a roll and press-bonded to prepare a fabric layer precursor in which the fabric (fibrous structure) was sandwiched between holding rubbers.

Table 4

| | | | Fabric A | Fabric B | Fabric C |
| --- | --- | --- | --- | --- | --- |
| Formation | | | Cord fabric | Plain weave | Plain weave |
| Warp yarn (first thread) | | Material | 6,6-nylon | Cotton/PET | Cotton/PET |
| | | Fineness/number of yarns | 420 dtex/1 | 20 count/2 | 20 count/2 |
| | | Arrangement density (yarn/5 cm) | 130 | 75 | 45 |
| Weft yarn (second thread) | | Material | Cotton | Cotton/PET | Cotton/PET |
| | | Fineness/number of yarns | 20 count/1 | 20 count/2 | 20 count/2 |
| | | Arrangement density (yarn/5 cm) | 5 | 75 | 45 |

(continued)

| | Fabric A | Fabric B | Fabric C |
|---|---|---|---|
| Formation | Cord fabric | Plain weave | Plain weave |
| Thickness (mm) | 0.25 | 0.50 | 0.40 |

[Overview of Respective Test Pieces]

An overview of respective test bodies (joined V-belts) is shown below in the order of the test bodies described in Tables 9 to 18 of the verification results to be described later.

Example 1 (Aspect in which Compression Rubber Layer is formed of Single Layer and does not have Fabric Layer, and Connecting Portion is Formed of Rib Valley)

(Production of Wrapped V-belt Portion Precursor)

A rubber composition E shown in Table 3 was used as a compression rubber layer sheet and a tension rubber layer sheet. A compression rubber layer sheet and an adhesion rubber layer sheet (rubber composition A) were sequentially wound around an outer periphery of the mantle. The cord was spirally spun on the outer periphery of the mantle, and the tension rubber layer sheet was wound around the cord to form an un-crosslinked annular laminate, thereby producing a wrapped V-belt portion precursor by the method described in the above embodiment (without using the reinforcing fabric layer fabric).

(Production of Tie Band Precursor)

A rubber composition F shown in Table 3 was used as a short fiber-containing rubber layer sheet to produce a short fiber-containing rubber layer precursor (thickness: 4.6 mm) by the method described in the above embodiment, and the short fiber-containing rubber layer precursor was used as a tie band precursor.

[Production of Joined V-belt]

Six wrapped V-belt portion precursors and tie band precursors were set in the device for crosslinking molding shown in FIG. 8, and were pressurized to have 1.2 MPa and heated at a temperature of 160°C by the method described in the above embodiment to produce a crosslinked sleeve in which six wrapped V-belt portions [ARPM A type, cross-sectional dimension: width (W1) 13.2 mm × thickness (H1) 8.4 mm, belt length 122 inches] were connected and bonded by a tie band. Then, a predetermined rib shape (A shape shown in Table 1, numerical values in parentheses were used as each H and d) was formed on an outer peripheral side of the crosslinked sleeve by a grinding process. At this time, the connecting portion of the tie band is formed of the rib valley (minimum thickness portion of the tie band). The obtained crosslinked sleeve was cut to produce a joined V-belt (joined V-belt having a structure shown in FIG. 1) including two wrapped V-belt portions. The obtained joined V-belt had a belt width (W) of 29.1 mm, a belt thickness (H) of 13.0 mm, and a belt length of 122 inches.

Example 2 (Aspect in which Compression Rubber Layer is formed of Single Layer and does not have Fabric Layer, and Connecting Portion is Formed of Rib Peak)

A joined V-belt (joined V-belt having a structure shown in FIG. 3) including two wrapped V-belt portions was produced in the same manner as in Example 1 except that in the step of forming a predetermined rib shape on the outer peripheral side of the crosslinked sleeve by a grinding process, the connecting portion was changed to be formed of the rib peak (maximum thickness portion of the tie band). The dimensions (width, thickness, length) of the obtained joined V-belt were also the same as those in Example 1.

Example 3 (Aspect in which Compression Rubber Layer is formed of Two Layers and does not have Fabric Layer, and Connecting Portion is Formed of Rib Valley)

A joined V-belt including two wrapped V-belt portions was produced in the same manner as in Example 1 except that the compression rubber layer was formed of two layers, the rubber composition E was used in the second compression rubber layer sheet, and a rubber composition D having a higher hardness was used in the first compression rubber layer sheet and the tension rubber layer sheet. The dimensions (width, thickness, length) of the obtained joined V-belt were also the same as those in Example 1.

Example 4 (Aspect in which Compression Rubber Layer is formed of Two Layers and does not have Fabric Layer, and Connecting Portion is Formed of Rib Peak)

A joined V-belt including two wrapped V-belt portions was produced in the same manner as in Example 3 except that in the step of forming a predetermined rib shape on the outer peripheral side of the crosslinked sleeve by a grinding process, the connecting portion was changed to be formed of the rib peak (maximum thickness portion of the tie band). The dimensions (width, thickness, length) of the obtained joined V-belt were also the same as those in Example 3.

Example 5 (Aspect in which Compression Rubber Layer is formed of Single Layer, Fabric Layer is Provided, and Connecting Portion is Formed of Rib Valley)

A rolled sheet of the fabric layer holding rubber and a fabric A (cord fabric) were simultaneously passed between rolls having substantially the same surface speed of the calender roll. A sheet of a rubber-attached cord fabric (thickness: 0.7 mm) was prepared by laminating treatment to both front and back surfaces of the cord fabric (the treatment was performed once to each of the front and back surfaces of the cord fabric) by a method of embedding the cord fabric in the fabric layer holding rubber (rubber composition C), and this sheet was used as a fabric layer precursor.

A joined V-belt (joined V-belt having a structure shown in FIG. 2) including two wrapped V-belt portions was produced (A shape shown in Table 1) in the same manner as in Example 1 except that a sheet (thickness: 3.9 mm) obtained by superimposing a short fiber-containing rubber layer precursor (thickness: 3.2 mm) and a fabric layer precursor was used as a tie band precursor in the production of a tie band precursor. The obtained joined V-belt had a belt width (W) of 29.1 mm, a belt thickness (H) of 12.3 mm, and a belt length of 122 inches.

Example 6 (Aspect in which Compression Rubber Layer is formed of Single Layer, Fabric Layer is Provided, and Connecting Portion is Formed of Rib Peak)

A joined V-belt (joined V-belt having a structure shown in FIG. 4) including two wrapped V-belt portions was produced in the same manner as in Example 5 except that in the step of forming a predetermined rib shape on the outer peripheral side of the crosslinked sleeve by a grinding process, the connecting portion was changed to be formed of the rib peak (maximum thickness portion of the tie band). The dimensions (width, thickness, length) of the obtained joined V-belt were also the same as those in Example 5.

Example 7 (Aspect in which Compression Rubber Layer is formed of Two Layers, Fabric Layer is Provided, and Connecting Portion is Formed of Rib Valley)

A joined V-belt including two wrapped V-belt portions was produced in the same manner as in Example 5 except that the compression rubber layer was formed of two layers, the rubber composition E was used in the second compression rubber layer sheet, and the rubber composition D having a higher hardness was used in the first compression rubber layer sheet and the tension rubber layer sheet. The dimensions (width, thickness, length) of the obtained joined V-belt were also the same as those in Example 5.

Example 8 (Aspect in which Compression Rubber Layer is formed of Two Layers, Fabric Layer is Provided, and Connecting Portion is Formed of Rib Peak)

A joined V-belt including two wrapped V-belt portions was produced in the same manner as in Example 7 except that in the step of forming a predetermined rib shape on the outer peripheral side of the crosslinked sleeve by a grinding process, the connecting portion was changed to be formed of the rib peak (maximum thickness portion of the tie band). The dimensions (width, thickness, length) of the obtained joined V-belt were also the same as those in Example 7.

Comparative Example 1 (Aspect in which Compression Rubber Layer is formed of Single Layer and Tie Band is formed of Flat Fabric Layer)

In the production of the tie band precursor, a rubber-attached woven fabric (type of fabric: fabric B) used as a precursor of the cover fabric was used as a tie band precursor. A joined V-belt (commonly used wrapped joined V-belt in the related art) including two wrapped V-belt portions was produced in the same manner as in Example 1 except that when the plurality of wrapped V-belt portion precursors and the tie band precursor were set in the pressing molds, a direction of yarns constituting a woven fabric in the tie band precursor was set to be oblique to the belt width direction (both of the warp and the weft have 30° with respect to the belt width direction, that is, both yarns were bilaterally symmetric with respect to the belt length direction), and a grinding process for forming a predetermined rib shape on the belt outer peripheral side was not performed. The obtained joined V-belt had a belt width (W) of 29.1 mm, a belt thickness (H) of 9.1 mm, and a belt length of 122 inches.

Comparative Example 2 (Aspect in which Compression Rubber Layer is formed of Two Layers and Tie Band is formed of Flat Fabric Layer)

A joined V-belt including two wrapped V-belt portions was produced in the same manner as in Comparative Example 1 except that the compression rubber layer was formed of two layers, the rubber composition E was used in the second compression rubber layer sheet, and the rubber composition D having a higher hardness was used in the first compression rubber layer sheet and the tension rubber layer sheet. The dimensions (width, thickness, length) of the obtained joined V-belt were also the same as those in Comparative Example 1.

Comparative Example 3 (Aspect in which Compression Rubber Layer is formed of Single Layer and Tie Band is formed of Flat Short Fiber-containing Rubber Layer)

A joined V-belt (joined V-belt having a structure in which no rib portion was formed in FIG. 1) including two wrapped V-belt portions was produced in the same manner as in Example 1 except that a thickness of the rolled sheet was changed such that a finished thickness of the short fiber-containing rubber layer precursor was 2.1 mm and a grinding process of forming a predetermined rib shape on the belt outer peripheral side was not performed. The obtained joined V-belt had a belt width (W) of 29.1 mm, a belt thickness (H) of 10.5 mm, and a belt length of 122 inches.

Comparative Example 4 (Aspect in which Compression Rubber Layer is formed of Two Layers and Tie Band is formed of Flat Short Fiber-containing Rubber Layer)

A joined V-belt including two wrapped V-belt portions was produced in the same manner as in Comparative Example 3 except that the compression rubber layer was formed of two layers, the rubber composition E was used in the second compression rubber layer sheet, and the rubber composition D having a higher hardness was used in the first compression rubber layer sheet and the tension rubber layer sheet. The dimensions (width, thickness, length) of the obtained joined V-belt were also the same as those in Comparative Example 3.

Comparative Example 5 (Aspect in which Compression Rubber Layer is formed of Single Layer and Tie Band is formed of Laminate of Flat Fabric Layer and Flat Short Fiber-containing Rubber Layer)

A joined V-belt (joined V-belt having a structure in which no rib portion was formed in FIG. 2) including two wrapped V-belt portions was produced in the same manner as in Example 5 except that the tie band precursor was made into a sheet (thickness: 2.1 mm) obtained by superimposing a short fiber-containing rubber layer precursor (thickness: 1.4 mm) and a fabric layer precursor including the fabric A (cord fabric), and a grinding process for forming a predetermined rib shape on the belt outer peripheral side was not performed. The obtained joined V-belt had a belt width (W) of 29.1 mm, a belt thickness (H) of 10.5 mm, and a belt length of 122 inches.

Comparative Example 6 (Aspect in which Compression Rubber Layer is formed of Two Layers and Tie Band is formed of Laminate of Flat Fabric Layer and Flat Short Fiber-containing Rubber Layer)

A joined V-belt including two wrapped V-belt portions was produced in the same manner as in Comparative Example 5 except that the compression rubber layer was formed of two layers, the rubber composition E was used in the second compression rubber layer sheet, and the rubber composition D having a higher hardness was used in the first compression rubber layer sheet and the tension rubber layer sheet. The dimensions (width, thickness, length) of the obtained joined V-belt were also the same as those in Comparative Example 5.

Examples 9 to 12

A joined V-belt including two wrapped V-belt portions was produced in the same manner as in Example 8 except that the height H2 of the rib portion (and thus the thickness H3 of the entire tie band) was changed as shown in Tables 11 and 12 (to be thinner). The dimensions (width, thickness, length) of each of the obtained joined V-belts were the same as those in Example 8 except for the belt thickness H.

Examples 13 to 15

A joined V-belt including two wrapped V-belt portions was produced in the same manner as in Example 4 except that the height H2 of the rib portion (and thus the thickness H3 of the entire tie band) was changed as shown in Tables 11 and 12 (to be thicker). The dimensions (width, thickness, length) of each of the obtained joined V-belts were the same as those in Example 4 except for the belt thickness H.

Examples 17 to 20

A joined V-belt including two wrapped V-belt portions was produced in the same manner as in Example 8 except that the arrangement pitch P2 of the rib portions was changed as shown in Tables 13 and 14. The dimensions (width, thickness, length) of each of the obtained joined V-belts were the same as those in Example 8 except for a rib shape (peak, valley) in the connecting portion.

Example 16

A joined V-belt including two wrapped V-belt portions was produced in the same manner as in Example 17 except that the height H2 of the rib portion (and thus the thickness H3 of the entire tie band) was changed as shown in Tables 13 and 14. The dimensions (width, thickness, length) of the obtained joined V-belt were the same as those in Example 17 except for the belt thickness H.

Example 21

A joined V-belt including two wrapped V-belt portions was produced in the same manner as in Example 20 except that the fabric layer was absent and the height H2 of the rib portion (and thus the thickness H3 of the entire tie band) was changed as shown in Tables 13 and 14. The dimensions (width, thickness, length) of the obtained joined V-belt were the same as those in Example 20 except for the belt thickness H.

Example 22 and Comparative Example 7

A joined V-belt including two wrapped V-belt portions was produced in the same manner as in Example 8 except that a type of a rubber composition of a rubber layer constituting a tie band including the presence or absence of a short fiber-containing rubber layer constituting a tie band was changed as shown in Tables 15 and 16. The dimensions (width, thickness, length) of each of the obtained joined V-belts were also the same as those in Example 8.

Comparative Example 8

A joined V-belt including two wrapped V-belt portions was produced in the same manner as in Example 4 except that a type of a rubber composition of a rubber layer constituting a tie band including the presence or absence of a short fiber-containing rubber layer constituting the tie band was changed to the rubber composition E not containing the short fibers as shown in Tables 15 and 16. The dimensions (width, thickness, length) of the obtained joined V-belt were also the same as those in Example 4.

Example 23

A joined V-belt including two wrapped V-belt portions was produced in the same manner as in Example 8 except that a type of a fabric constituting a fabric layer was changed to a plain weave fabric (fabric C) as shown in Tables 17 and 18. For the fabric layer precursor, a sheet of a rubber-attached plain weave (thickness: 0.7 mm) was prepared in the same manner as in Example 5, and this sheet was used as a fabric layer precursor. Further, in the production of the joined V-belt, a direction of yarns constituting a fabric (fabric C) was arranged to be inclined with respect to the belt width direction (both of the warp and the weft have 30° with respect to the belt width direction, that is, both yarns were bilaterally symmetric with respect to the belt length direction). The dimensions (width, thickness, length) of the obtained joined V-belt were also the same as those in Example 8.

[Evaluation on joined V-belt: Item, Method and Criterion]

For the respective test pieces shown in Tables 9 to 18, power-transmission performance (slip ratio) on a belt back face and durability performance were verified in order to determine whether a joined V-belt capable of solving the problem was obtained.

[Power-transmission Performance (Slip Ratio)]

(Test name) Power-transmission Performance (Slip Ratio) Measurement Test

(Tester)

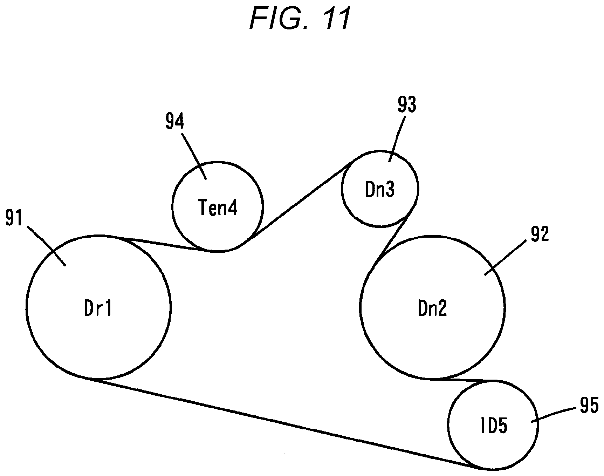

In the test, a multiaxial running tester of a multiaxial layout shown in FIG. 11 was used.

In the tester, pulleys having a layout including a driving pulley (Dr1), a driven pulley (Dn2 and Dn3), a tension pulley (Ten 4), and an idler pulley (ID5) shown in Table 5 are arranged in the order of a driving pulley (Dr1) 91, a tension pulley (Ten 4) 94, a driven pulley (Dn3) 93, a driven pulley (Dn2) 92, and an idler pulley (ID5) 95. The tester is able to confirm power-transmission performance (slip ratio) and durability performance (presence or absence of a failure of a belt) under various conditions (loads or the like).

Table 5

| Pulley | Coordinate (mm) | | Pulley diameter (mm) |
|---|---|---|---|
| | X | Y | |
| Dr1 | 0.0 | 0.0 | 300 |
| Dn2 | 725.8 | 0.0 | 300 |
| Dn3 | 612.2 | 250.9 | 170 |
| Ten4 | 250.0 | 220.0 | 190 |
| ID5 | 855.8 | -251.6 | 190 |

(Test Method)

The joined V-belts of the respective test pieces were made to run in a state where a load shown in Table 6 (9.5 kW for the driven pulley Dn2, 23.0 kW for the driven pulley Dn3, and 32.5 kW in total) was applied before and after running for evaluating durability performance to be described later. A slip ratio was calculated according to the following equation by measuring a rotation speed (rpm) of the driven pulley (back face driven pulley) Dn2. Rotation speeds of the driving pulley Dr1 and the driven pulley Dn2 under no load and a rotation speed of the driving pulley Dr1 under load in the measurement are shown in Table 7.

$$\text{Slip Ratio (\%)} = [(K2 - K1)/K1] \times 100$$

[In the equation, K1 = R1/N1 and K2 = R2/N2, where R1 represents a rotation speed (rpm) of a driving pulley during unloaded operation, N1 represents a rotation speed (rpm) of a driven pulley during unloaded operation, R2 represents a rotation speed (rpm) of a driving pulley during loaded operation, and N2 represents a rotation speed (rpm) of a driven pulley during loaded operation]

Table 6

| | Load (kW) | | |
|---|---|---|---|
| | Total | Dn2 | Dn3 |
| Conditions | 32.5 | 9.5 | 23.0 |

Table 7

| Rotation speed of driving pulley under no load | 800 rpm |
|---|---|
| Rotation speed of driving pulley under load | 800 rpm |
| Rotation speed of driven pulley under no load | 784 rpm |

(Determination Criteria)

Whether the double-sided transmission can be performed with high performance can be determined based on how much the power-transmission performance on the belt outer peripheral side (back face side) is improved, as compared with a wrapped joined V-belt (Comparative Examples 1 and 2) in which the belt outer peripheral surface (back face) is formed in a flat shape.

As the determination of the power-transmission performance on the belt outer peripheral side (back face side), a value of a slip ratio between the frictional power-transmission flank on the belt outer peripheral side and the back face driven pulley Dn2 was used as an index [the smaller the value of the slip ratio is, the more excellent the power-transmission performance on the belt outer peripheral side (back face side) is, and the higher the performance of double-sided transmission is possible],

in the case where the value of the slip ratio [larger value before and after running (before running and after 240 Hr running)] (%) was 0.5% or less, the power-transmission performance was determined as a,
in the case where the value was more than 0.5% and 0.6% or less, the power-transmission performance was determined as b,
in the case where the value was more than 0.6% and 0.7% or less, the power-transmission performance was determined as c, and
in the case where the value was more than 0.7%, the power-transmission performance was determined as d.

From the viewpoint of suitability (power-transmission performance on a belt back face of the joined V-belt) for actual use in this application (joined V-belt for which double-sided driving is required), any of the belts determined as a to c was regarded as a belt having an acceptable level.

[Durability Performance]

(Test Name) Durability Performance Test

(Tester)

In the test, a multiaxial running tester similar to the tester of the above-described durability performance and power-transmission performance (slip ratio) measurement test was used.

(Test Method)

The joined V-belts of the respective test pieces were made to run for 240 hours under conditions shown in Table 8, and the belts were visually observed, and the presence or absence of an abnormality such as a crack or peeling and the time until the belts were broken was evaluated according to the following criteria. Regarding a load during running, as shown in Table 6, a load of 9.5 kW was applied to the driven pulley (back face driven pulley) Dn2, a load of 23.0 kW was applied to the driven pulley Dn3, and a load of 32.5 kW in total was applied. In Examples 1 to 23 and Comparative Examples 7 to 8, a V-grooved pulley was used for Dr1 and Dn3, a V-ribbed pulley was used for Dn2, and a flat pulley was used for Ten4 and ID5. In Comparative Examples 1 to 6, a V-grooved pulley was used for Dr1 and Dn3, and a flat pulley was used for Dn2, Ten4, and ID5.

Table 8

| Belt shape (V-belt portion)/size | ARPM A type/122 inches |
|---|---|
| Number of connected portions | Two |
| Rotation speed of driving pulley | 800 rpm |
| Running time | 240 Hr |
| Test temperature (atmosphere temperature) | 75°C |

(Determination Criteria)

As the determination of the durability performance of each belt,

in the case where the durability performance test could be performed for 240 Hr and an abnormality such as a crack or peeling was not observed, the durability performance was determined as a,

in the case where the durability performance test could be performed 240 Hr and an abnormality such as a crack or peeling was observed to some extent (extent that the performance of the joined V-belt was not adversely affected), the durability performance was determined as b,

in the case where the durability running time was 200 Hr or more and less than 240 Hr and abnormalities (crack or peeling) to such an extent that the performance of the joined V-belt was affected occurred, the durability performance was determined as c, and

in the case where the durability running time was less than 200 Hr and an abnormality (crack or peeling) to such an extent that the performance of the joined V-belt was affected occurred, the durability performance was determined as d.

The "durability running time" refers to a time during which the durability performance test was performed.

From the viewpoint of suitability (durability performance of the joined V-belt) for actual use in this application (joined V-belt for which double-sided driving is required), any of the belts determined as a to c was regarded as a belt having an acceptable level.

(Comprehensive Determination)

Criteria of the comprehensive determination (ranking) of a joined V-belt capable of solving the present problem were as follows based on the results of the determination in the two evaluation items (power-transmission performance (slip ratio), and durability performance), and the rank C or higher was determined to be acceptable.

Rank A: The case where all of the above evaluation items were determined as "a" was judged that there was no problem in practical use, and was rated as the best rank.

Rank B: In the above evaluation items, when there was no determination c but even one evaluation item was determined as b, there was no problem in practical use, but it was ranked as slightly inferior.

Rank C: In the above evaluation items, when there was no determination d but even one evaluation item was determined as c, there was no problem in practical use, but it was ranked as a rank slightly inferior to the rank B.

Rank D: When even one of the evaluation items was determined as d, it was given a rank (fail) which is insufficient as a solution to the present problem.

[Verification Results]

The results of the evaluation of the obtained joined V-belts by the above test are shown in Tables 9 to 18.

Table 9 (comparison in which configuration of tie band was changed)

| | | | | Example | | | | | | | | Comparative Example | | | | | |
|---|---|---|---|---|---|---|---|---|---|---|---|---|---|---|---|---|---|
| | | | | 1 | 2 | 3 | 4 | 5 | 6 | 7 | 8 | 1 | 2 | 3 | 4 | 5 | 6 |
| Joined V-belt | Tie band | Back surface shape | | Rib shape (plurality of rib portions) | | | | | | | | Flat shaped (flat) | | | | | |
| | | Presence or absence of short fiber-containing rubber layer (type of rubber composition) | | Present (rubber composition F) | | | | | | | | Absent | | Absent | Present (rubber composition F) | | |
| | | Presence or absence of fabric layer (type of fabric) | | Absent | | | | | Present (fabric A) | | | Present (fabric B) | | Absent | | Present (fabric A) | |
| | | Rib shape (peak/valley) at connecting portion | | Valley / Peak | Valley / Peak | Valley / Peak | Valley / Peak | Valley / Peak | Valley / Peak | Valley / Peak | Valley / Peak | | | | | | |
| | | Height H2 (mm) of rib portion | | 2.5 | | | | | 2.5 | | | | | - | - | - | - |
| | | Thickness | Base portion d (mm) | 2.1 | | | | | 1.4 | | | | | - | - | - | - |
| | | | Total H3 (mm) | 4.6 | | | | | 3.9 | | | 0.7 | | - | 2.1 | - | - |
| | | Arrangement pitch P2 (mm) of rib portions | | 3.975 | | | | | | | | | | | | | |
| | | Adhesion rubber | Rubber composition | A | | | | | | | | | | | | | |
| | | | Hardness (°) | 76 | | | | | | | | | | | | | |
| | | Tension rubber layer | Rubber composition | E | E | D | D | E | E | D | D | E | D | E | D | E | D |
| | | | Hardness (°) | 76 | 76 | 93 | 93 | 76 | 76 | 93 | 93 | 76 | 93 | 76 | 93 | 76 | 93 |
| | Wrapped V-belt portion | Compression rubber layer | First compression rubber layer Rubber composition | E | E | D | D | E | E | D | D | E | D | E | D | E | D |
| | | | First compression rubber layer Hardness (°) | 76 | 76 | 93 | 93 | 76 | 76 | 93 | 93 | 76 | 93 | 76 | 93 | 76 | 93 |
| | | | Second compression rubber layer Rubber composition | - | - | E | E | - | - | E | E | - | E | - | E | - | E |
| | | | Second compression rubber layer Hardness (°) | - | - | 76 | 76 | - | - | 76 | 76 | - | 76 | - | 76 | - | 76 |
| | | | Hardness difference (°) | - | - | 17 | 17 | - | - | 17 | 17 | - | 17 | - | 17 | - | 17 |

(continued)

| | | | | Example | | | | | | | | Comparative Example | | | | | |
|---|---|---|---|---|---|---|---|---|---|---|---|---|---|---|---|---|---|
| | | | | 1 | 2 | 3 | 4 | 5 | 6 | 7 | 8 | 1 | 2 | 3 | 4 | 5 | 6 |
| | | Thickness | Tension rubber layer (mm) | 0.8 | | | | | | | | | | | | | |
| | | | First compression rubber layer L2 (mm) | - | 3.7 | | - | | 3.7 | | | - | 3.7 | - | 3.7 | - | 3.7 |
| | | | Compression rubber layer L1 (mm) | 5.2 | | | | | | | | | | | | | |
| | | | L2/L1 ratio | - | 71% | | - | | 71% | | | - | 71% | - | 71% | - | 71% |
| | | | Total H1 (mm) | 8.4 | | | | | | | | | | | | | |

Table 10 (comparison in which configuration of tie band was changed)

| | | Example | | | | | | | | Comparative Example | | | | | |
|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 |
| Joined V-belt | Number of connecting of wrapped V-belt portions | Two | | | | | | | | | | | | | |
| | Belt thickness H (mm) | 13.0 | | | | 12.3 | | | | 9.1 | | 10.5 | | | |
| | Arrangement pitch P1 (mm) of wrapped V-belt portions | 15.9 | | | | | | | | | | | | | |
| | Width e (mm) of connecting portion | 2.7 | | | | | | | | | | | | | |
| | H2/H1 | 0.30 | | | | | | | | - | | | | | |
| | H3/H1 | 0.55 | | | | 0.46 | | | | 0.08 | | 0.25 | | | |
| | P1/P2 | 4 | | | | | | | | - | | | | | |

| | | | Example | | | | | | | | Comparative Example | | | | | |
|---|---|---|---|---|---|---|---|---|---|---|---|---|---|---|---|---|
| | | | 1 | 2 | 3 | 4 | 5 | 6 | 7 | 8 | 1 | 2 | 3 | 4 | 5 | 6 |
| Evaluatioon belt | Power-transmission performance (slip ratio)(%) | Before durability running | 0.40 | 0.40 | 0.40 | 0.40 | 0.40 | 0.40 | 0.40 | 0.40 | 1.00 | 1.00 | 0.60 | 0.60 | 0.60 | 0.60 |
| | | After durability running | 0.52 | 0.52 | 0.50 | 0.50 | 0.49 | 0.49 | 0.48 | 0.48 | - | 1.30 | 0.73 | 0.71 | 0.72 | 0.71 |
| | | Determination | b | b | a | a | a | a | a | a | d | d | d | d | d | d |
| | Durability performance | Presence or absence of defect in tie band excluding connecting portion | Slightly | Slightly | Slightly | Slightly | Absent | Absent | Absent | Absent | Absent | Absent | Slightly | Slightly | Absent | Absent |
| | | Presence or absence of defect in connecting portion | Slightly | Absent | Slightly | Absent | Absent | Absent | Absent | Absent | Peeling | Slightly | Slightly | Slightly | Absent | Absent |
| | | Presence or absence of defect in wrapped V-belt portion | Slightly | Slightly | Absent | Absent | Slightly | Slightly | Absent | Absent | Slightly | Slightly | Slightly | Absent | Slightly | Absent |
| | | Time until damage (Hr) | Complete | Complete | Complete | Complete | Complete | Complete | Complete | Complete | 180 | Complete | Complete | Complete | Complete | Complete |
| | | Determination | b | b | b | b | b | b | a | a | d | b | b | b | b | a |
| Comprehensive determination (rank) | | | B | B | B | B | B | B | A | A | D | D | D | D | D | D |

(Examples 1 to 8 and Comparative Examples 1 to 6)

In each of the joined V-belts of Examples 1 to 8, no remarkable abnormality was observed up to 240 Hr, which is a termination time of the durability performance test, and each of the belt was completely run. As in Examples 3, 4, 7, and 8, it can be seen that an aspect in which a rubber layer having a high hardness is provided on a tension member layer side in the compression rubber layer has an effect on the durability (particularly, durability of the wrapped V-belt portion).

Further, as in Examples 2, 4, 6, and 8, it can be seen that an aspect in which the connecting portion is formed by the maximum thickness portion (rib peak) of the tie band also has an effect on the durability (in particular, durability of the connecting portion).

Furthermore, as in Examples 5 to 8, it can be seen that an aspect in which a tie band further includes a fabric layer including a fibrous structure (cord fabric) on the belt inner peripheral side has an effect on the durability (particularly, durability of the connecting portion and the tie band excluding the connecting portion).

On the other hand, in each of the joined V-belts of Comparative Examples 1 to 6 in which a back face shape of the belt was formed in a flat shape (flat), no remarkable abnormality was observed before the termination time except for Comparative Example 1 (commonly used wrapped joined V-belt in the related art), and each of the belts was completely run (the durability performance was determined as a or b). In an aspect (Comparative Example 2) in which the belt outer peripheral side (back face side) was formed of a fabric layer (rubber-attached woven fabric), the power-transmission performance (slip ratio) was 1.00% before the durability running and 1.30% after the durability running, and the result was determined as "d" (rank D in the comprehensive determination). In an aspect (Comparative Examples 3 to 6) in which the belt outer peripheral side (back face side) was formed of the short fiber-containing rubber layer, the power-transmission performance (slip ratio) was 0.60% before the durability running and 0.71% to 0.73% after the durability running, and the result was determined as "d" (rank D in the comprehensive determination).

On the other hand, the power-transmission performance (slip ratio) of each of the joined V-belt in Examples 1 to 8 was 0.40% before the durability running, 0.48 to 0.52% (determined as a) after the durability running, and was determined as a or b (rank A or rank B in the comprehensive determination). That is, it can be said that a slip ratio on a belt outer peripheral side (back face side) is reduced and the power-transmission performance is improved in a joined V-belt formed such that a back face of the belt includes a plurality of rib portions as compared with a wrapped joined V-belt in which a back face of the belt is formed in a flat shape. Accordingly, it can be said that a connecting type joined V-belt having an inverted V-shaped side face (frictional power-transmission flank) capable of coming into contact with a V-ribbed pulley on an outer peripheral surface side in addition to an inner peripheral surface side can perform double-sided transmission with high performance and can perform high-capacity transmission.

Table 11 [Comparison in which height H2 (H2/H1 and H3/H1) of rib portion was varied]

| | | | | Example | | | | | | | |
|---|---|---|---|---|---|---|---|---|---|---|---|
| | | | | 9 | 10 | 11 | 12 | 8 | 13 | 14 | 15 |
| Joined V-belt | Tie band | | Back surface shape | Rib shape (plurality of rib portions) | | | | | | | |
| | | | Presence or absence of short fiber-containing rubber layer (type of rubber composition) | Present (rubber composition F) | | | | | | | |
| | | | Presence or Absence of Fabric Layer (type of fabric) | Present (fabric A) | | | | | Absent | | |
| | | | Rib shape (peak/valley) at connecting portion | Peak | | | | | | | |
| | | | Height H2 (mm) of rib portion | 0.9 | 1.1 | 1.8 | 2.1 | 2.5 | 2.7 | 2.9 | 3.8 |
| | | Thickness | Base portion d (mm) | 1.4 | | | | | 2.1 | | |
| | | | Total H3 (mm) | 2.3 | 2.5 | 3.2 | 3.5 | 3.9 | 4.8 | 5.0 | 5.9 |
| | | | Arrangement pitch P2 (mm) of rib portions | 3.975 | | | | | | | |
| | | Adhesion rubber | Rubber composition | A | | | | | | | |
| | | | Hardness (°) | 76 | | | | | | | |
| | | Tension rubber layer | Rubber composition | D | | | | | | | |
| | | | Hardness (°) | 93 | | | | | | | |

(continued)

| | | | | | 9 | 10 | 11 | 12 | 8 | 13 | 14 | 15 |
|---|---|---|---|---|---|---|---|---|---|---|---|---|
| | | | | | | | | Example | | | | |
| Wrapped V-belt portion | Compression rubber layer | First compression rubber layer | Rubber composition | | | | | D | | | | |
| | | | Hardness (°) | | | | | 93 | | | | |
| | | Second compression rubber layer | Rubber composition | | | | | E | | | | |
| | | | Hardness (°) | | | | | 76 | | | | |
| | | Hardness difference (°) | | | | | | 17 | | | | |
| | Thickness | Tension rubber layer (mm) | | | | | | 0.8 | | | | |
| | | First compression rubber layer L2 (mm) | | | | | | 3.7 | | | | |
| | | Compression rubber layer L1 (mm) | | | | | | 5.2 | | | | |
| | | L2/L1 ratio | | | | | | 71% | | | | |
| | | Total H1 (mm) | | | | | | 8.4 | | | | |

Table 12 [Comparison in which height H2 (H2/H1 and H3/H1) of rib portion was varied]

| | | | Example | | | | | | | |
|---|---|---|---|---|---|---|---|---|---|---|
| | | | 9 | 10 | 11 | 12 | 8 | 13 | 14 | 15 |
| Joined V-belt | Number of connecting of wrapped V-belt portions | | Two | | | | | | | |
| | Belt thickness H (mm) | | 10.7 | 10.9 | 11.6 | 11.9 | 12.3 | 13.2 | 13.4 | 14.3 |
| | Arrangement pitch P1 (mm) of wrapped V-belt portions | | 15.9 | | | | | | | |
| | Width e (mm) of connecting portion | | 2.7 | | | | | | | |
| | H2/H1 | | 0.11 | 0.13 | 0.21 | 0.25 | 0.30 | 0.32 | 0.35 | 0.45 |
| | H3/H1 | | 0.27 | 0.30 | 0.38 | 0.42 | 0.46 | 0.57 | 0.60 | 0.70 |
| | PI/P2 | | 4 | | | | | | | |
| Evaluation on belt | Powertranemiesion performance (slip ratio)(%) | Before durability running | 0.52 | 0.50 | 0.45 | 0.41 | 0.40 | 0.39 | 0.37 | 0.30 |
| | | After durability running | 0.62 | 0.60 | 0.55 | 0.50 | 0.48 | 0.47 | 0.45 | - |
| | | Determination | c | b | b | a | a | a | a | a |
| | Durability performance | Presence or absence of defect in tie band excluding connecting portion | Absent | Absent | Absent | Absent | Absent | Slightly | Slightly | Crack |
| | | Presence or absence of defect in connecting portion | Absent | Absent | Absent | Absent | Absent | Absent | Absent | Absent |
| | | Presence or absence of defect in wrapped V-belt portion | Absent | Absent | Absent | Absent | Absent | Absent | Absent | Absent |
| | | Time until damage (Hr) | Complete | Complete | Complete | Complete | Complete | Complete | Complete | 220 |
| | | Determination | a | a | a | a | a | b | b | c |
| Comprehensive determination (rank) | | | C | B | B | A | A | B | B | C |



Examples 8 to 12

Based on the belt in Example 8 in which H2/H1 was 0.30 and H3/H1 was 0.46, which is a length ratio in the belt thickness direction (the compression rubber layer was formed of two layers, the fabric layer was present, the connecting portion was formed of a rib peak, and the arrangement pitch of the rib portions was 3.975 mm), the height of the rib portion was changed to 2.5 mm and compared.

When the height (H2) of the rib portion decreased, a slip ratio on the belt back face tended to increase. In contrast to Example 8, in Example 10 in which the height of the rib portion was decreased to 1.1 mm, and as a result, the ratio (H2/H1) of the height (H2) of the rib portion to the thickness (H1) of the wrapped V-belt portion was decreased to 0.13 and the ratio (H3/H1) of the thickness (H3) of the tie band to the thickness (H1) of the wrapped V-belt portion was decreased to 0.30, the power-transmission performance (slip ratio) at an acceptable level could be secured (determined as b) and the result was determined as rank B. In contrast to Example 8, in Example 9 in which the height of the rib portion was further decreased to 0.9 mm and H2/H1 was decreased to 0.11 and H3/H1 was decreased to 0.27, the power-transmission performance (slip ratio) at an acceptable level could be ensured (determined as c), and the result was determined as rank C although slightly inferior to Example 10.

Examples 8 and 13 to 15

Based on the belt in Example 8 in which H2/H1 was 0.30 and H3/H1 was 0.46, which is a length ratio in the belt thickness direction (the compression rubber layer was formed of two layers, the connecting portion was formed of a rib peak, and the arrangement pitch of the rib portion was 3.975 mm), the belt was changed to have a configuration in which the tie band did not include a fabric layer (configuration in which the thickness of the tie band is further increased), and the height of the rib portion was changed to 2.5 mm and compared.

When the height (H2) of the rib portion increased, the slip ratio on the belt back face decreased, but the flexibility decreased. Therefore, cracks were likely to enter the rib portions, and durability performance tended to decrease. In contrast to Example 8, in Example 14 in which the height of the rib portion was increased to 2.9 mm, and as a result, the ratio (H2/H1) of the height (H2) of the rib portion to the thickness (H1) of the wrapped V-belt portion was increased to 0.35 and the ratio (H3/H1) of the thickness (H3) of the tie band to the thickness (H1) of the wrapped V-belt portion was increased to 0.60, the durability performance at an acceptable level could be ensured (determined as b), and the result was determined as rank B. In contrast to Example 8, in Example 15 in which the height of the rib portion was further increased to 3.8 mm and H2/H1 was increased to 0.45 and H3/H1 was increased to 0.70, the durability performance at an acceptable level could be ensured (determined as c), and the result was determined as rank C although slightly inferior to Example 14.

Table 13 [Comparison in which arrangement pitch P2 (P1/P2) of rib portions was varied]

| | | | | | Example | | | | | | |
|---|---|---|---|---|---|---|---|---|---|---|---|
| | | | | | 16 | 17 | 18 | 8 | 19 | 20 | 21 |
| Joined V-belt | Tie band | Back surface shape | | | Rib shape (plurality of rib portions) | | | | | | |
| | | Presence or absence of short fiber-containing rubber layer (type of rubber composition) | | | Present (rubber composition F) | | | | | | |
| | | Presence or absence of fabric layer (type of fabric) | | | Present (Fabric A) | | | | | | Absent |
| | | Rib shape (peak/valley) at connecting portion | | | Valley | | Peak | | Valley/Peak/Valley | | |
| | | Height H2 (mm) of rib portion | | | 0.9 | 2.5 | | | | | 3.8 |
| | | Thickness | Base portion d (mm) | | 1.4 | 1.4 | | | | | 2.1 |
| | | | Total H3 (mm) | | 2.3 | 3.9 | | | | | 5.9 |
| | | Arrangement pitch P2 (mm) of rib portions | | | 15.9 | 15.9 | 10.6 | 3.975 | 2.271 | 1.988 | 1.988 |
| | Wrapped V-belt portion | Adhesion rubber | | Rubber composition | A | | | | | | |
| | | | | Hardness (°) | 76 | | | | | | |
| | | Tension rubber layer | | Rubber composition | D | | | | | | |
| | | | | Hardness (°) | 93 | | | | | | |
| | | Compression rubber layer | First compression rubber layer | Rubber composition | D | | | | | | |
| | | | | Hardness (°) | 93 | | | | | | |
| | | | Second compression rubber layer | Rubber composition | E | | | | | | |
| | | | | Hardness (°) | 76 | | | | | | |
| | | Hardness difference (°) | | | 17 | | | | | | |
| | | Thickness | Tension rubber layer (mm) | | 0.8 | | | | | | |
| | | | First compression rubber layer L2 (mm) | | 3.7 | | | | | | |
| | | | Compression rubber layer L1 (mm) | | 5.2 | | | | | | |
| | | | L2/L1 ratio | | 71% | | | | | | |
| | | | Total H1 (mm) | | 8.4 | | | | | | |

Table 14 [Comparison in which arrangement pitch P2 (P1/P2) of rib portions was varied]

| | | | Example | | | | | | |
|---|---|---|---|---|---|---|---|---|---|
| | | | 16 | 17 | 18 | 8 | 19 | 20 | 21 |
| Joined V-belt | | Number of connecting of wrapped V-belt portions | Two | | | | | | |
| | | Belt thickness H (mm) | 10.7 | 12.3 | | | | | 14.3 |
| | | Arrangement pitch P1 (mm) of wrapped V-belt portions | 15.9 | | | | | | |
| | | Width e (mm) of connecting portion | 2.7 | | | | | | |
| | | H2/H1 | 0.11 | 0.30 | | | | | 0.45 |
| | | H3/H1 | 0.27 | 0.46 | | | | | 0.70 |
| | | P1/P2 | 1 | 1 | 1.5 | 4 | 7 | 8 | 8 |
| Evaluation on belt | Power-transmission performance (slip ratio)(%) | Before durability running | 0.60 | 0.52 | 0.50 | 0.40 | 0.34 | 0.32 | 0.22 |
| | | After durability running | 0.70 | 0.62 | 0.60 | 0.48 | 0.42 | - | - |
| | | Determination | c | c | b | a | a | a | a |
| | Durability performance | Presence or absence of defect in tie band excluding connecting portion | Absent | Absent | Absent | Absent | Slightly | Crack | Crack |
| | | Presence or absence of defect in connecting portion | Absent | Absent | Absent | Absent | Slightly | Slightly | Slightly |
| | | Presence or absence of defect in wrapped V-belt portion | Absent | Absent | Absent | Absent | Absent | Slightly | Slightly |
| | | Time until damage (Hr) | Complete | Complete | Complete | Complete | Complete | 220 | 200 |
| | | Determination | a | a | a | a | b | c | c |
| Comprehensive determination (rank) | | | c | c | B | A | B | c | c |

Examples 8, 17, and 18

Based on the belt in Example 8 in which the arrangement pitch ratio (P1/P2) of the wrapped V-belt portions to the rib portions was 4 (the compression rubber layer was formed of two layers, the fabric layer was present, the connecting portion was formed of a rib peak, and the height of the rib portion was 2.5 mm), the arrangement pitch of the rib portions was changed to 3.975 mm and compared.

When the arrangement pitch (P2) of the rib portions increased, a slip ratio on the belt back face tended to increase. In contrast to Example 8, in Example 18 in which the arrangement pitch of the rib portions was increased to 10.6 mm, and as a result, the arrangement pitch ratio (P1/P2) of the wrapped V-belt portions with respect to the rib portions was decreased to 1.5, the power-transmission performance (slip ratio) at an acceptable level could be ensured (determined as b), and the result was determined as rank B. In contrast to Example 8, in Example 17 in which the arrangement pitch of the rib portions was further increased to 15.9 mm and P1/P2 was decreased to 1, the power-transmission performance (slip ratio) at an acceptable level could be ensured (determined as c), and the result was determined as rank C although slightly inferior to Example 18.

Examples 8, 19, and 20

Based on the belt in Example 8 in which the arrangement pitch ratio (P1/P2) of the wrapped V-belt portions to the rib portions was 4 (the compression rubber layer was formed of two layers, the fabric layer was present, the connecting portion was formed of a rib peak, and the height of the rib portion was 2.5 mm), the arrangement pitch of the rib portions was changed to 3.975 mm and compared.

When the arrangement pitch (P2) of the rib portions decreased, the slip ratio on the belt back face decreased, but the side pressure resistance decreased. Therefore, cracks were likely to enter the rib portions, and durability performance tended to decrease. In contrast to Example 8, in Example 19 in which the arrangement pitch of the rib portions was decreased to 2.271 mm, and as a result, the arrangement pitch ratio (P1/P2) of the wrapped V-belt portions with respect to the rib portions was increased to 7, the durability performance at an acceptable level could be ensured (determined as b), and the result was determined as rank B. In contrast to Example 8, in Example 20 in which the arrangement pitch of the rib portions was further decreased to 1.988 mm and P1/P2 was increased to 8, the power-transmission performance (slip ratio) at an acceptable level could be ensured (determined as c), and the result was determined as rank C although slightly inferior to Example 19.

Examples 16 and 21

Example 16 is an example in which the power-transmission performance (slip ratio) is near the lower limit, and is an example in which the lowest 0.9 mm of the height H2 of the rib portion in Examples 8 to 15 (the largest slip ratio) and the largest 15.9 mm of the arrangement pitch P2 of the rib portions in Examples 8 and 17 to 20 (the largest slip ratio) are combined. As in Examples 9 and 17, the durability performance was determined as a, but the power-transmission performance (slip ratio) was barely determined as "c" at an acceptable level, and the result was determined as rank C.

Example 21 is an example in which the durability performance is near the lower limit, and is an example in which the highest 3.8 mm of the height H2 of the rib portion in Examples 8 to 15 (the lowest durability performance) and the smallest 1.988 mm of the arrangement pitch P2 of the rib portions in Examples 8 and 17 to 20 (the lowest durability performance) are combined. As in Examples 15 and 20, the power-transmission performance (slip ratio) was determined as a, but the durability performance was barely determined as c at an acceptable level, and the result was determined as rank C.

(Summary of Results in Tables 11 to 14)

As in Example 16, since the V-shaped cross-sectional groove capable of coming into contact with the V-shaped side face (frictional power-transmission flank) of the back face driven pulley (V-ribbed pulley) was provided on the belt outer peripheral surface, a slip ratio on the belt outer peripheral surface (back face side) was effectively reduced (without excessive slip) and the power-transmission performance (slip ratio) could be secured even in a configuration (height of the rib portion: 0.9 mm, arrangement pitch of rib portions: 15.9 mm) in which the contact area was small. As a result, it was confirmed that double-sided driving was enabled effectively.

On the other hand, in a configuration in which the contact area between the V-shaped side face (frictional power-transmission flank) of the back face driven pulley (V-ribbed pulley) and the V-shaped cross-sectional groove is increased (the height of the rib portion is increased, and the arrangement pitch of the rib portions is reduced), there is a concern that the durability performance may be deteriorated due to cracking of the rib portion. However, even in a configuration in Example 21 (height of the rib portion: 3.8 mm, arrangement pitch of the rib portions: 1.988 mm), it was confirmed that the durability performance was enabled effectively.

From the results shown in Tables 11 to 14, it can be said that both the power-transmission performance (slip ratio) and the durability performance at an acceptable level effective for the double-sided driving can be achieved in the joined V-belt in which the height H2 (0.9 mm to 3.8 mm) of the rib portion and the arrangement pitch P2 (1.988 mm to 15.9 mm) of the rib portions were combined over a wide range.

Furthermore, from the viewpoint that the ratio (H2/H1) of the height (H2) of the rib portion to the thickness (H1) of the wrapped V-belt portion, which is the length ratio in the belt thickness direction, is about 0.11 to 0.45, the ratio (H3/H1) of the thickness (H3) of the tie band to the thickness (H1) of the wrapped V-belt portion is about 0.27 to 0.7, and the arrangement pitch ratio (P1/P2) of the wrapped V-belt portion with respect to the rib portion is about 1 to 8, it is possible to achieve both the power-transmission performance (slip ratio) at an acceptable level effective for the double-side driving and the durability performance.

In particular, a range in which H2/H1 is about 0.13 to 0.35, H3/H1 is about 0.3 to 0.6, and P1/P2 is about 1.5 to 7 is a preferable range from the viewpoint of the balance between the power-transmission performance (slip ratio) and the durability performance.

Table 15 (Comparison in which type of rubber composition of rubber layer constituting tie band was changed, including presence or absence of fabric layer)

| | | | | Example | | Comparative Example | |
|---|---|---|---|---|---|---|---|
| | | | | 8 | 22 | 7 | 8 |
| Joined V-belt | Tie band | | Back surface shape | Rib shape (plurality of rib portions) | | | |
| | | | Presence or absence of short fiber-containing rubber layer (type of rubber composition) | Present (rubber composition F) | Present (rubber composition G) | Absent (rubber composition E) | |
| | | | Presence or absence of fabric layer (type of fabric) | Present (fabric A) | | | Absent |
| | | | Rib shape (peak/valley) at connecting portion | Peak | | | |
| | | | Height H2 (mm) of rib portion | 2.5 | | | |
| | | Thickness | Base portion d (mm) | 1.4 | | | 2.1 |
| | | | Total H3 (mm) | 3.9 | | | 4.6 |
| | | | Arrangement pitch P2 (mm) of rib portions | 3.975 | | | |
| | Wrapped V-belt portion | Adhesion rubber | Rubber composition | A | | | |
| | | | Hardness (°) | 76 | | | |
| | | Tension rubber layer | Rubber composition | D | | | |
| | | | Hardness (°) | 93 | | | |
| | | Compression rubber layer | First compression rubber layer — Rubber composition | D | | | |
| | | | First compression rubber layer — Hardness (°) | 93 | | | |
| | | | Second compression rubber layer — Rubber composition | E | | | |
| | | | Second compression rubber layer — Hardness (°) | 76 | | | |
| | | | Hardness difference (°) | 17 | | | |

(continued)

| | | | | Example | | Comparative Example | |
|---|---|---|---|---|---|---|---|
| | | | | 8 | 22 | 7 | 8 |
| | | Thickness | Tension rubber layer (mm) | 0.8 | | | |
| | | | First compression rubber layer L2 (mm) | 3.7 | | | |
| | | | Compression rubber layer L1 (mm) | 5.2 | | | |
| | | | L2/L1 ratio | 71% | | | |
| | | | Total H1 (mm) | 8.4 | | | |

Table 16 (Comparison in which type of rubber composition of rubber layer constituting tie band was changed, including presence or absence of fabric layer)

| | | | Example | | Comparative Example | |
|---|---|---|---|---|---|---|
| | | | 8 | 22 | 7 | 8 |
| Joined V-belt | Number of connecting of wrapped V-belt portions | | Two | | | |
| | Belt thickness H (mm) | | 12.3 | | | |
| | Arrangement pitch P1 (mm) of wrapped V-belt portions | | 15.9 | | | |
| | Width e (mm) of connecting portion | | 2.7 | | | |
| | H2/H1 | | 0.30 | | | |
| | H3/H 1 | | 0.46 | | | 0.55 |
| | P1/P2 | | 4 | | | |
| Evaluation on belt | Power-transmission performance (slip ratio)(%) | Before durability running | 0.40 | 0.39 | 0.62 | 0.62 |
| | | After durability running | 0.48 | 0.47 | - | - |
| | | Determination | a | a | c | c |
| | Durability performance | Presence or absence of defect in tie band excluding connecting portion | Absent | Absent | Crack | Peeling |
| | | Presence or absence of defect in connecting portion | Absent | Absent | Slightly | Slightly |
| | | Presence or absence of defect in wrapped V-belt portion | Absent | Absent | Absent | Slightly |
| | | Time until damage (Hr) | Complete | Complete | 190 | 180 |
| | | Determination | a | a | d | d |
| Comprehensive determination (rank) | | | A | A | D | D |

(Examples 8 and 22 and Comparative Examples 7 and 8)

Based on the belt in Example 8 in which the type of the rubber composition of the short fiber-containing rubber layer constituting the tie band was the rubber composition F (the compression rubber layer was formed of two layers, the fabric layer was present, the connecting portion was formed of a rib peak, the height of the rib portion was 2.5 mm, and the arrangement pitch of the rib portion was 3.975 mm), the type of the rubber composition of the rubber layer constituting the tie band was changed and compared, including the presence or absence of the short fiber-containing rubber layer constituting the tie band.

In Example 22 having a tie band in which the short fiber-containing rubber layer (rubber composition G) containing short fibers whose proportion and type were different from those in Example 8 was laminated on the outer peripheral surface of the fabric layer, the belt performance [power-transmission performance (slip ratio) and durability performance] at an acceptable level could be secured in the same manner as in Example 8, and rank A was given in the comprehensive determination.

On the other hand, in Comparative Example 7 having a tie band in which a rubber layer (rubber composition E) not containing short fibers was laminated on the outer peripheral surface of the fabric layer, the power-transmission performance (slip ratio) on the belt back face was determined as c. However, the durability running time was less than 200 Hr, a crack was generated in the rib portion, the durability performance was determined as d, and rank D was given in the comprehensive determination.

In contrast to Example 8 in which the tie band had a fabric layer, in Comparative Example 8 having a tie band formed only of a rubber layer (rubber composition E) and having no fabric layer and containing no short fibers, the power-transmission performance (slip ratio) on the belt back face was determined as c. However, the durability running time was less than 200 Hr, interlayer peeling occurred between the tie band portion and the wrapped V-belt portion, the durability performance was determined as d, and rank D was given in the comprehensive determination.

From the above results, it can be said that when the tie band is formed of the short fiber-containing rubber layer and the fabric layer including the fibrous structure laminated on the belt inner peripheral side of the short fiber-containing rubber layer, there is an effect that the belt performance [power-transmission performance (slip ratio) and durability performance] at an acceptable level can be secured.

Table 17 (Comparison in which type of fabric of fabric layer was changed)

| | | | | Example | | |
|---|---|---|---|---|---|---|
| | | | | 8 | 23 | 4 |
| Joined V-belt | Tie band | Back surface shape | | Rib shape (plurality of rib portions) | | |
| | | Presence or absence of short fiber-containing rubber layer (type of rubber composition) | | Present (rubber composition F) | | |
| | | Presence or absence of fabric layer (type of fabric) | | Present (fabric A) | Present (fabric C) | Absent |
| | | Rib shape (peak/valley) at connecting portion | | Peak | | |
| | | Height H2 (mm) of rib portion | | 2.5 | | |
| | | Thickness | Base portion d (mm) | 1.4 | | 2.1 |
| | | | Total H3 (mm) | 3.9 | | 4.6 |
| | | Arrangement pitch P2 (mm) of rib portions | | 3.975 | | |
| | Wrapped V-belt portion | Adhesion rubber | Rubber composition | A | | |
| | | | Hardness (°) | 76 | | |
| | | Tension rubber layer | Rubber composition | D | | |
| | | | Hardness (°) | 93 | | |
| | | Compression rubber layer | First compression rubber layer — Rubber composition | D | | |
| | | | First compression rubber layer — Hardness (°) | 93 | | |
| | | | Second compression rubber layer — Rubber composition | E | | |
| | | | Second compression rubber layer — Hardness (°) | 76 | | |
| | | Hardness difference (°) | | 17 | | |

(continued)

|  |  |  |  | Example | | |
|---|---|---|---|---|---|---|
|  |  |  |  | 8 | 23 | 4 |
|  |  | Thickness | Tension rubber layer (mm) | 0.8 | | |
|  |  |  | First compression rubber layer L2 (mm) | 3.7 | | |
|  |  |  | Compression rubber layer L1 (mm) | 5.2 | | |
|  |  |  | L2/L1 ratio | 71% | | |
|  |  |  | Total H1 (mm) | 8.4 | | |

Table 18 (Comparison in which type of fabric of fabric layer was changed)

|  |  |  | Example | | |
|---|---|---|---|---|---|
|  |  |  | 8 | 23 | 4 |
| Joined V-belt | Number of connecting of wrapped V-belt portions | | Two | | |
|  | Belt thickness H (mm) | | 12.3 | | 13.0 |
|  | Arrangement pitch P1 (mm) of wrapped V-belt portions | | 15.9 | | |
|  | Width e (mm) of connecting portion | | 2.7 | | |
|  | H2/H1 | | 0.30 | | |
|  | H3/H 1 | | 0.46 | | 0.55 |
|  | P1/P2 | | 4 | | |
| Evaluation on belt | Power-transmission performance (slip ratio)(%) | Before durability running | 0.40 | 0.43 | 0.40 |
|  |  | After durability running | 0.48 | 0.51 | 0.50 |
|  |  | Determination | a | b | a |
|  | Durability performance | Presence or absence of defect in tie band excluding connecting portion | Absent | Slightly | Slightly |
|  |  | Presence or absence of defect in connecting portion | Absent | Absent | Absent |
|  |  | Presence or absence of defect in wrapped V-belt portion | Absent | Absent | Absent |
|  |  | Time until damage (Hr) | Complete | Complete | Complete |
|  |  | Determination | a | b | b |
| Comprehensive determination (rank) | | | A | B | B |

(Examples 4, 8, and 23)

Based on the belt in Example 8 in which the tie band was constituted by the fabric layer in which the fabric (fibrous structure) was a cord fabric (fabric A) and the short fiber-containing rubber layer (the compression rubber layer was formed of two layers, the connecting portion was formed of a rib peak, the height of the rib portion was 2.5 mm, and the arrangement pitch of the rib portions was 3.975 mm), the type of the fabric of the fabric layer constituting the tie band was changed and compared, including the presence or absence of the fabric layer constituting the tie band.

In Example 23 in which the type of fabric constituting the fabric layer was a plain weave (fabric C), as compared with Example 8 in which the fabric was a cord fabric (fabric A), the flexibility was slightly lowered, the power-transmission performance (slip ratio) on the belt back face was determined as b, and the durability performance was determined as b (rank B also in the comprehensive determination) because a slight amount of interlayer peeling (to the extent that the performance of the joined V-belt was not affected) was observed.

In Example 4 in which the tie band was formed of only the short fiber-containing rubber layer (rubber composition F) and did not include a fabric layer, as described above, the power-transmission performance (slip ratio) on the belt back face was determined as a as in Example 8, and the durability performance was determined as b (crack was slightly generated in the rib portion), and rank B was also given in the comprehensive determination.

From the above results, it is not essential to include the fabric layer in the tie band, but it is considered to be preferable to form the fabric (fibrous structure) in the fabric layer with a cord fabric (fabric A) in that there is an effect that the belt performance [power-transmission performance (slip ratio) and durability performance] at an acceptable level can be more reliably secured.

From all of the above verification results, it was confirmed that at least the tie band on the belt outer peripheral side (back face side) included the short fiber-containing rubber layer in which the short fibers were oriented in the belt width direction, and the short fiber-containing rubber layer included a plurality of rib portions extending in the belt longitudinal direction, whereby both the power-transmission performance (slip ratio) and the durability performance at an acceptable level effective for double-sided driving could be achieved (the double-sided transmission with high performance and transmission with high-capacity could be achieved). A wrapped joined V-belt in which a belt back face is formed in a flat shape or a joined V-belt in which a belt back face is formed to include a plurality of rib portions but a short fiber is not contained in a rubber composition of a rubber layer constituting a tie band cannot achieve the above two performances.

Although the present invention has been described in detail with reference to specific embodiments, it is apparent to those skilled in the art that various changes and modifications can be made without departing from the spirit and scope of the present invention. The present application is based on Japanese Patent Application (Japanese Patent Application No. 2022-121172) filed on July 29, 2022 and Japanese Patent Application (Japanese Patent Application No. 2023-120314) filed on July 24, 2023, and the contents thereof are incorporated herein by reference.

INDUSTRIAL APPLICABILITY

The joined V-belt of the present invention can be used as various types of frictional power-transmission belts for which double-sided driving is required, and can be used, for example, in general industrial machines such as a compressor, a power generator, and a pump; textile machines such as a spinner, a spinning machine, a loom, a knitting machine, and a dyeing finish machine; and agricultural machines such as a tiller, a rice transplanter, a vegetable transplanter, a transplanter, a binder, a combine harvester, a bean cutter, a corn grinder, a potato harvester, a beat harvesting machine, a vegetable harvesting machine, a weed cutter, a stripper, a rice huller, and a rice mill. Among the machines, the joined V-belt is suitable for a high-load and large-sized agricultural machine used in Europe, America and the like, for example, a tiller, a binder, a combine harvester, a vegetable harvesting machine, a stripper, a bean cutter, a corn grinder, a potato harvester, and a beat harvesting machine.

REFERENCE SIGNS LIST

    1 joined V-belt
    2 wrapped V-belt portion
    3 tension rubber layer
    4 tension member layer
    4a tension member
    5 compression rubber layer
    6 cover fabric
    7 tie band
    7a rib portion
    7b short fiber

Claims

1.  A joined V-belt comprising:

    a plurality of wrapped V-belt portions; and
    a tie band, wherein
    outer peripheral surfaces of the wrapped V-belt portions are connected by the tie band,
    each of the wrapped V-belt portions comprises a belt body and a cover fabric covering an outer surface of the belt body,

the belt body comprises a tension member layer comprising a tension member, a tension rubber layer laminated on a belt outer peripheral side of the tension member layer, and a compression rubber layer laminated on a belt inner peripheral side of the tension member layer,

the tie band comprises a short fiber-containing rubber layer in which a short fiber is oriented in a belt width direction, and

the short fiber-containing rubber layer comprises a plurality of rib portions extending in a belt longitudinal direction.

2. The joined V-belt according to claim 1, wherein an arrangement pitch of the rib portions is smaller than an arrangement pitch of the wrapped V-belt portions.

3. The joined V-belt according to claim 1 or 2, wherein an arrangement pitch of the rib portions is larger than a width of a gap between adjacent wrapped V-belt portions.

4. The joined V-belt according to any one of claims 1 to 3, wherein the tie band comprises the short fiber-containing rubber layer and a fabric layer, and

the fabric layer comprises a fibrous structure laminated on an inner peripheral surface of the short fiber-containing rubber layer.

5. The joined V-belt according to claim 4, wherein the fibrous structure is a cord fabric comprising a plurality of first threads extending in a belt width direction and a plurality of second threads extending in a direction intersecting the belt width direction, and

an arrangement density of the second threads is lower than an arrangement density of the first threads.

6. The joined V-belt according to any one of claims 1 to 5, wherein a center of a top portion of the rib portions is located at a gap between adjacent wrapped V-belt portions.

7. The joined V-belt according to any one of claims 1 to 6, wherein a thickness of the tie band is 0.3 to 0.7 times a thickness of the wrapped V-belt portions.

8. A method for producing a joined V-belt according to any one of claims 1 to 7, the method comprising:

connecting a plurality of wrapped V-belt portion precursors by a tie band precursor;
crosslinking and molding the connected wrapped V-belt portion precursors and tie band precursor by heating and pressurizing to obtain a crosslinked molded body; and
forming rib portions on an outer peripheral side of the crosslinked molded body.

# FIG. 1

WIDTH OF CONNECTING PORTION

*FIG. 2*

WIDTH OF CONNECTING PORTION

## FIG. 3

WIDTH OF CONNECTING PORTION

# FIG. 4

WIDTH OF CONNECTING PORTION

## FIG. 5

## FIG. 6

## FIG. 7

## FIG. 8

## FIG. 9

FIG. 10

# FIG. 11

## INTERNATIONAL SEARCH REPORT

| International application No. |
|---|
| **PCT/JP2023/027874** |

| A. | CLASSIFICATION OF SUBJECT MATTER |
|---|---|

*F16G 5/06*(2006.01)i; *B29D 29/10*(2006.01)i; *D03D 1/00*(2006.01)i; *D03D 9/00*(2006.01)i; *D03D 19/00*(2006.01)i; *F16G 5/08*(2006.01)i; *F16G 5/20*(2006.01)i

FI: F16G5/06 A; B29D29/10; D03D1/00 A; D03D1/00 D; D03D9/00; D03D19/00; F16G5/06 C; F16G5/08; F16G5/20 C

According to International Patent Classification (IPC) or to both national classification and IPC

| B. | FIELDS SEARCHED |
|---|---|

Minimum documentation searched (classification system followed by classification symbols)

F16G5/06; B29D29/10; D03D1/00; D03D9/00; D03D19/00; F16G5/08; F16G5/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2022-85864 A (MITSUBOSHI BELTING LTD.) 08 June 2022 (2022-06-08) paragraphs [0020]-[0198], [0202]-[0213], fig. 1-3 | 1-8 |
| Y | JP 2020-51617 A (MITSUBOSHI BELTING LTD.) 02 April 2020 (2020-04-02) paragraphs [0017], [0018], [0029]-[0043], [0056], [0063], fig. 1, 2 | 1-8 |
| Y | Microfilm of the specification and drawings annexed to the request of Japanese Utility Model Application No. 163633/1978 (Laid-open No. 78856/1980) (MITSUBOSHI BELTING LTD.) 30 May 1980 (1980-05-30), specification, page 7, lines 10-16, page 8, lines 17-19, fig. 1, 5 | 1-8 |
| Y | JP 2012-518760 A (DAYCO PRODUCTS, LLC) 16 August 2012 (2012-08-16) paragraphs [0018]-[0024], fig. 3-10 | 1-8 |
| Y | Microfilm of the specification and drawings annexed to the request of Japanese Utility Model Application No. 88437/1986 (Laid-open No. 199553/1987) (MITSUBOSHI BELTING LTD.) 18 December 1987 (1987-12-18) specification, page 6, lines 11-17, fig. 1, 2 | 2-8 |
| A | JP 2006-349002 A (BANDO CHEM. IND., LTD.) 28 December 2006 (2006-12-28) | 1-8 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/027874** |

**C.    DOCUMENTS CONSIDERED TO BE RELEVANT**

| Category* | Citation of document, with indication, where appropriate, of the relevant passages | Relevant to claim No. |
|---|---|---|
| A | JP 2019-10868 A (MITSUBOSHI BELTING LTD.) 24 January 2019 (2019-01-24) | 1-8 |
| A | JP 6577157 B1 (MITSUBOSHI BELTING LTD.) 18 September 2019 (2019-09-18) | 1-8 |

Form PCT/ISA/210 (second sheet) (January 2015)

# EP 4 563 843 A1

## INTERNATIONAL SEARCH REPORT
### Information on patent family members

International application No.

**PCT/JP2023/027874**

| Patent document cited in search report | | | Publication date (day/month/year) | Patent family member(s) | | | Publication date (day/month/year) |
|---|---|---|---|---|---|---|---|
| JP | 2022-85864 | A | 08 June 2022 | (Family: none) | | | |
| JP | 2020-51617 | A | 02 April 2020 | (Family: none) | | | |
| JP | 55-78856 | U1 | 30 May 1980 | US | 4781664 | A | |
| | | | | column 3, lines 52-65, fig. 1, 5 | | | |
| | | | | EP | 11986 | A1 | |
| | | | | CA | 1112484 | A | |
| JP | 2012-518760 | A | 16 August 2012 | US | 2010/0216583 | A1 | |
| | | | | paragraphs [0027]-[0033], fig. 3-10 | | | |
| | | | | US | 2012/0214630 | A1 | |
| | | | | WO | 2010/098963 | A1 | |
| | | | | EP | 2401523 | A1 | |
| | | | | EP | 3064801 | A1 | |
| | | | | CA | 2750110 | A1 | |
| | | | | KR | 10-2011-0120288 | A | |
| | | | | AU | 2010218307 | A1 | |
| | | | | CN | 102317645 | A | |
| | | | | MX | 2011008260 | A | |
| | | | | BR | PI1007831 | A2 | |
| JP | 62-199553 | U1 | 18 December 1987 | US | 4773895 | A | |
| | | | | column 3, lines 31-42, fig. 1, 2 | | | |
| | | | | EP | 249404 | A2 | |
| | | | | KR | 10-1988-0000713 | A | |
| JP | 2006-349002 | A | 28 December 2006 | (Family: none) | | | |
| JP | 2019-10868 | A | 24 January 2019 | (Family: none) | | | |
| JP | 6577157 | B1 | 18 September 2019 | US | 2021/0148436 | A1 | |
| | | | | WO | 2020/003872 | A1 | |
| | | | | EP | 3812612 | A1 | |
| | | | | CA | 3100307 | A1 | |

Form PCT/ISA/210 (patent family annex) (January 2015)

REFERENCES CITED IN THE DESCRIPTION

**Patent documents cited in the description**

- JP H10274290 A
- JP 2001241513 A
- JP H04351350 A
- JP 2020003061 A
- JP 2016200231 A
- JP 2019032078 A
- JP H06137381 A
- JP 2015104778 A
- JP 2022121172 A
- JP 2023120314 A